(19) Europäisches Patentamt
European Patent Office
Office européen des brevets

(11) **EP 4 398 502 A1**

(12) **EUROPEAN PATENT APPLICATION**
published in accordance with Art. 153(4) EPC

(43) Date of publication:
**10.07.2024 Bulletin 2024/28**

(21) Application number: **22874843.0**

(22) Date of filing: **26.09.2022**

(51) International Patent Classification (IPC):
**H04L 1/00** *(2006.01)*

(52) Cooperative Patent Classification (CPC):
**H04L 1/00**

(86) International application number:
**PCT/CN2022/121333**

(87) International publication number:
**WO 2023/051458 (06.04.2023 Gazette 2023/14)**

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**
Designated Extension States:
**BA ME**
Designated Validation States:
**KH MA MD TN**

(30) Priority: **29.09.2021 CN 202111151018**

(71) Applicant: **Huawei Technologies Co., Ltd.
Shenzhen, Guangdong 518129 (CN)**

(72) Inventors:
• **QU, Weilin
Shenzhen, Guangdong 518129 (CN)**
• **JIN, Zhe
Shenzhen, Guangdong 518129 (CN)**
• **LUO, Zhihu
Shenzhen, Guangdong 518129 (CN)**
• **HOU, Hailong
Shenzhen, Guangdong 518129 (CN)**

(74) Representative: **Körber, Martin Hans
Mitscherlich PartmbB
Patent- und Rechtsanwälte
Karlstraße 7
80333 München (DE)**

(54) **COMMUNICATION METHOD AND APPARATUS**

(57) Embodiments of this application provide a communication method and apparatus. The method includes: A terminal device determines a frequency domain start position of a control resource set, where the control resource set includes detecting a physical downlink control channel PDCCH candidate used for scheduling a system information block 1, and the PDCCH is a PDCCH sent by a network device to schedule the SIB 1. The terminal device determines, in the control resource set, a control channel element CCE index included in a PDCCH within a first bandwidth and a CCE index included in a PDCCH within a second bandwidth, where an offset exists between the CCE index within the first bandwidth and the CCE index within the second bandwidth. The terminal device detects the PDCCH based on the CCE index included in the PDCCH within the first bandwidth in the control resource set. According to embodiments of this application, in a limited dedicated network bandwidth, a complete Type 0-PDCCH can be received from a CORESET 0, to improve transmission performance of the PDCCH.

FIG. 8

**Description**

This application claims priority to Chinese Patent Application No. 202111151018.8, filed with the China National Intellectual Property Administration on September 29, 2021 and entitled "COMMUNICATION METHOD AND APPARATUS", which is incorporated herein by reference in its entirety.

**TECHNICAL FIELD**

This application relates to the field of communication technologies, and in particular, to a communication method and apparatus.

**BACKGROUND**

In a process in which a terminal device initially accesses a network, the terminal device needs to first detect that time-frequency synchronization is performed on a synchronization signal and physical broadcast channel block (synchronization signal and PBCH block, SSB). After the time-frequency synchronization succeeds, the terminal device determines, based on an indication of information in the SSB, a control resource set (control resource set zero, CORESET) corresponding to a type 0-physical downlink control channel (type 0-physical downlink control channel, Type 0-PDCCH) that is sent for scheduling a system information block 1 (system information block 1, SIB1), namely, configuration information of the CORESET 0. The terminal device detects a PDCCH in the CORESET 0 at a candidate physical downlink control channel (physical downlink control channel, PDCCH) position, where downlink control information (downlink control information, DCI) carried on the PDCCH is used for scheduling transmission of the system information block 1 (system information block 1, SIB1), and then the terminal device receives the SIB1 in the CORESET 0 and demodulates the SIB1.

However, in a limited dedicated network bandwidth, for example, less than 5 megahertz (MHz), for example, 3 MHz, a network device sends a PDCCH to the terminal device according to an existing NR protocol, and cannot send a complete Type 0-PDCCH at a lowest aggregation level in the CORESET 0, for example, a PDCCH at an aggregation level of 4. Correspondingly, the terminal device cannot receive the complete Type 0-PDCCH in the CORESET 0. Therefore, in the limited dedicated network bandwidth, transmission performance of the Type 0-PDCCH that is sent for scheduling the SIB1 in the CORESET 0 greatly deteriorates, and efficiency of subsequently receiving the SIB1 is affected.

**SUMMARY**

Embodiments of this application disclose a communication method and apparatus, so that in a limited dedicated network bandwidth, a complete Type 0-PDCCH can be received from a CORESET 0, to improve transmission performance of the Type 0-PDCCH.

According to a first aspect, an embodiment of this application discloses a communication method, including the following steps.

A terminal device determines a frequency domain start position of a control resource set. The control resource set includes detecting a physical downlink control channel PDCCH candidate used for scheduling a system information block 1 (SIB1). The PDCCH is a PDCCH sent by a network device to schedule the SIB1.

The terminal device determines, in the control resource set, a control channel element CCE index included in a PDCCH within a first bandwidth and a CCE index included in a PDCCH within a second bandwidth. An offset exists between the CCE index within the first bandwidth and the CCE index within the second bandwidth.

The terminal device detects the PDCCH based on the CCE index included in the PDCCH within the first bandwidth in the control resource set.

In the foregoing method, the control resource set is a control resource set 0 (CORESET 0), and the PDCCH used for scheduling the SIB1 is a Type 0-PDCCH. The first bandwidth may be a narrow bandwidth, for example, the first bandwidth is less than 5 MHz, and the first bandwidth may be 3 MHz. The second bandwidth may be a wide bandwidth, for example, the second bandwidth is greater than 5 MHz, and the second bandwidth may be 20 MHz or 100 MHz. According to the foregoing method, a complete Type 0-PDCCH can be received on the first bandwidth, namely, a narrowband network, to improve transmission performance of the Type 0-PDCCH without affecting reception of the SIB1.

In a possible implementation, the $1^{st}$ CCE index in the CCE index within the second bandwidth is a CCE index 0, and a frequency domain start position of the CCE index 0 is the frequency domain start position of the control resource set.

In another possible implementation, the first bandwidth is less than the second bandwidth, and the second bandwidth includes the first bandwidth.

In another possible implementation, the terminal device determines that a CCE-to-resource element group REG mapping relationship within the first bandwidth in the control resource set is a non-interleaved mapping relationship.

In another possible implementation, that the terminal device determines that a CCE-to-resource element group REG mapping relationship within the first bandwidth in the control resource set is a non-interleaved mapping relationship includes: The terminal device receives first indication information from the network device. The first indication information indicates that the CCE-to-REG mapping relationship within the first bandwidth in the control resource set is the non-interleaved mapping relationship.

In another possible implementation, the offset between the CCE index within the first bandwidth and the CCE index within the second bandwidth is related to a first parameter. The first parameter is an offset offset between a synchronization signal block SSB obtained through frequency domain alignment and a frequency domain lower boundary of a control resource set corresponding to a CCE within the second bandwidth.

In another possible implementation, a quantity of time domain symbols of the control resource set is 2.

In another possible implementation, the terminal device determines that a CCE-to-REG mapping relationship within the first bandwidth in the control resource set is an interleaved mapping relationship.

In another possible implementation, that the terminal device determines that a CCE-to-REG mapping relationship within the first bandwidth in the control resource set is an interleaved mapping relationship includes: The terminal device receives second indication information from the network device. The second indication information indicates that the CCE-to-REG mapping relationship within the first bandwidth in the control resource set is the interleaved mapping relationship.

According to a second aspect, an embodiment of this application discloses a communication method, including the following steps.

A network device sends, to a terminal device within a first bandwidth, a physical downlink control channel PDCCH candidate used for scheduling a system information block 1 (SIB 1). The PDCCH belongs to a control resource set. In the control resource set, a control channel element CCE index included in a PDCCH within the first bandwidth is different from a CCE index included in a PDCCH within a second bandwidth. An offset exists between the CCE index within the first bandwidth and the CCE index within the second bandwidth. The CCE index included in the PDCCH within the first bandwidth in the control resource set is used by the terminal device to detect the PDCCH.

In a possible implementation, the 1st CCE index in the CCE index within the second bandwidth is a CCE index 0, and a frequency domain start position of the CCE index 0 is a frequency domain start position of the control resource set.

In another possible implementation, the first bandwidth is less than the second bandwidth, and the second bandwidth includes the first bandwidth.

In another possible implementation, the network device sends first indication information to the terminal device. The first indication information indicates that a CCE-to-REG mapping relationship within the first bandwidth in the control resource set is a non-interleaved mapping relationship.

In another possible implementation, the offset between the CCE index within the first bandwidth and the CCE index within the second bandwidth is related to a first parameter. The first parameter is an offset offset between a synchronization signal block SSB obtained through frequency domain alignment and a frequency domain lower boundary of a control resource set corresponding to a CCE within the second bandwidth.

In another possible implementation, a quantity of time domain symbols of the control resource set is 2.

In another possible implementation, the network device sends second indication information to the terminal device. The first indication information indicates that a CCE-to-REG mapping relationship within the first bandwidth in the control resource set is a non-interleaved mapping relationship.

For technical effects brought by the second aspect or the possible implementations, refer to the descriptions of the technical effects brought by the first aspect or the corresponding implementations.

According to a third aspect, an embodiment of this application discloses a communication method, including the following steps.

A terminal device determines a quantity of resource blocks RBs occupied by a first control resource set in frequency domain within a first bandwidth and a frequency domain start position of the first control resource set, and a quantity of RBs occupied by a second control resource set in frequency domain within a second bandwidth and a frequency domain start position of the second control resource set. The first control resource set includes detecting a physical downlink control channel PDCCH candidate used for scheduling a system information block 1 (SIB1). The PDCCH is a PDCCH sent by a network device to schedule the SIB1. The quantity of RBs of the first control resource set in frequency domain is less than a minimum quantity of RBs of the second control resource set in frequency domain.

The terminal device starts to detect the PDCCH at the frequency domain start position of the first control resource set.

In the foregoing method, a control resource set is a control resource set 0 (CORESET 0), and the PDCCH used for scheduling the SIB1 is a Type 0-PDCCH. The first bandwidth may be a narrow bandwidth, for example, the first bandwidth is less than 5 MHz, and the first bandwidth may be 3 MHz. The second bandwidth may be a wide bandwidth, for example, the second bandwidth is greater than 5 MHz, and the second bandwidth may be 20 MHz or 100 MHz. In a manner of defining a case in which the quantity of RBs of the first control resource set in frequency domain is less than the minimum quantity of RBs of the second control resource set in frequency domain, a complete Type 0-PDCCH can be received on the first bandwidth, namely, a narrowband network, to improve transmission performance of the Type 0-PDCCH without affecting reception of the SIB1.

In a possible implementation, the first bandwidth is less than the second bandwidth, and the second bandwidth includes the first bandwidth.

In another possible implementation, the quantity of RBs occupied by the first control resource set in frequency domain is less than 24.

In another possible implementation, the quantity of RBs occupied by the first control resource set in frequency domain is one of 12, 15, 16, 18, and 20.

In another possible implementation, a subcarrier spacing corresponding to the first control resource set is 15 kilohertz kHz.

In another possible implementation, a first offset offset corresponding to the first control resource set is different from a second offset offset corresponding to the second control resource set. The first offset is an offset between an SSB obtained through frequency domain alignment and a frequency domain lower boundary of the first control resource set. The second offset is an offset between the SSB obtained through frequency domain alignment and a frequency domain lower boundary of the second control resource set.

In another possible implementation, the first offset offset is less than 0.

In another possible implementation, the first offset offset is one of -4 RBs, -3 RBs, -2 RBs, -1 RB, and 0 RBs.

In another possible implementation, a quantity of time domain symbols of the first control resource set is 3.

According to a fourth aspect, an embodiment of this application discloses a communication method, including the following steps.

A network device sends, to a terminal device within a first bandwidth, a physical downlink control channel PDCCH candidate used for scheduling a system information block 1

(SIB1). The PDCCH belongs to a first control resource set within the first bandwidth. A quantity of resource blocks RBs occupied by the first control resource set in frequency domain within the first bandwidth is less than a quantity of RBs occupied by a second control resource set in frequency domain within a second bandwidth. A frequency domain start position of the first control resource set within the first bandwidth is used by the terminal device to detect the PDCCH.

In a possible implementation, the first bandwidth is less than the second bandwidth, and the second bandwidth includes the first bandwidth.

In another possible implementation, the quantity of RBs occupied by the first control resource set in frequency domain is less than 24.

In another possible implementation, the quantity of RBs occupied by the first control resource set in frequency domain is one of 12, 15, 16, 18, and 20.

In another possible implementation, a subcarrier spacing corresponding to the first control resource set is 15 kilohertz kHz.

In another possible implementation, a first offset offset corresponding to the first control resource set is different from a second offset offset corresponding to the second control resource set. The first offset is an offset between an SSB obtained through frequency domain alignment and a frequency domain lower boundary of the first control resource set. The second offset is an offset between the SSB obtained through frequency domain alignment and a frequency domain lower boundary of the second control resource set.

In another possible implementation, the first offset offset is less than 0.

In another possible implementation, the first offset offset is one of -4 RBs, -3 RBs, -2 RBs, -1 RB, and 0 RBs.

In another possible implementation, a quantity of time domain symbols of the first control resource set is 3.

For technical effects brought by the fourth aspect or the possible implementations, refer to the descriptions of the technical effects brought by the third aspect or the corresponding implementations.

According to a fifth aspect, an embodiment of this application discloses a communication apparatus, including a processing unit and a communication unit.

The processing unit is configured to determine a frequency domain start position of a control resource set. The control resource set is used for detecting a physical downlink control channel PDCCH candidate used for scheduling a system information block 1 (SIB1). The PDCCH is a PDCCH sent by a network device to schedule the SIB1.

The processing unit is configured to determine, in the control resource set, a control channel element CCE index included in a PDCCH within a first bandwidth and a CCE index included in a PDCCH within a second bandwidth. An offset exists between the CCE index within the first bandwidth and the CCE index within the second bandwidth.

The processing unit is configured to detect the PDCCH based on the CCE index included in the PDCCH within the first bandwidth in the control resource set.

In a possible implementation, the 1st CCE index in the CCE index within the second bandwidth is a CCE index 0, and a frequency domain start position of the CCE index 0 is the frequency domain start position of the control resource set.

In another possible implementation, the first bandwidth is less than the second bandwidth, and the second bandwidth includes the first bandwidth.

In another possible implementation, the processing unit is configured to determine that a CCE-to-resource element group REG mapping relationship within the first bandwidth in the control resource set is a non-interleaved mapping relationship.

In another possible implementation, the communication unit is configured to receive first indication information from the network device. The first indication information indicates that the CCE-to-REG mapping relationship within the first bandwidth in the control resource set is the non-interleaved mapping relationship.

In another possible implementation, the offset between the CCE index within the first bandwidth and the CCE index within the second bandwidth is related to a first parameter. The first parameter is an offset offset between a synchronization signal block SSB obtained through frequency domain alignment and a frequency domain lower boundary of a control resource set corresponding to the 1st CCE within the second bandwidth.

In another possible implementation, a quantity of time domain symbols of the control resource set is 2.

In another possible implementation, the processing unit is configured to determine that a CCE-to-REG mapping relationship within the first bandwidth in the control resource set is an interleaved mapping relationship.

In another possible implementation, the communication unit is configured to receive second indication information from the network device. The second indication information indicates that the CCE-to-REG mapping relationship within the first bandwidth in the control resource set is the interleaved mapping relationship.

For technical effects brought by the fifth aspect or the possible implementations, refer to the descriptions of the technical effects brought by the first aspect or the corresponding implementations.

According to a sixth aspect, an embodiment of this application discloses a communication apparatus, including: a processing unit and a communication unit.

The communication unit is configured to send, to a terminal device within a first bandwidth, a physical downlink control channel PDCCH candidate used for scheduling a system information block 1 (SIB1). The PDCCH belongs to a control resource set. In the control resource set, a control channel element CCE index included in a PDCCH within the first bandwidth is different from a CCE index included in a PDCCH within a second bandwidth. An offset exists between the CCE index within the first bandwidth and the CCE index within the second bandwidth. The CCE index included in the PDCCH within the first bandwidth in the control resource set is used by the terminal device to detect the PDCCH.

In a possible implementation, the 1st CCE index in the CCE index within the second bandwidth is a CCE index 0, and a frequency domain start position of the CCE index 0 is a frequency domain start position of the control resource set.

In another possible implementation, the first bandwidth is less than the second bandwidth, and the second bandwidth includes the first bandwidth.

In another possible implementation, the communication unit is configured to send first indication information to the terminal device. The first indication information indicates that a CCE-to-REG mapping relationship within the first bandwidth in the control resource set is a non-interleaved mapping relationship.

In another possible implementation, the offset between the CCE index within the first bandwidth and the CCE index within the second bandwidth is related to a first parameter. The first parameter is an offset offset between a synchronization signal block SSB obtained through frequency domain alignment and a frequency domain lower boundary of a control resource set corresponding to the 1st CCE within the second bandwidth.

In another possible implementation, a quantity of time domain symbols of the control resource set is 2.

In another possible implementation, the communication unit is configured to send second indication information to the terminal device. The first indication information indicates that a CCE-to-REG mapping relationship within the first bandwidth in the control resource set is a non-interleaved mapping relationship.

For technical effects brought by the sixth aspect or the possible implementations, refer to the descriptions of the technical effects brought by the second aspect or the corresponding implementations.

According to a seventh aspect, an embodiment of this application discloses a communication apparatus, including a processing unit and a communication unit.

The processing unit is configured to determine a quantity of resource blocks RBs occupied by a first control resource set in frequency domain within a first bandwidth and a frequency domain start position of the first control resource set, and a quantity of RBs occupied by a second control resource set in frequency domain within a second bandwidth and a frequency domain start position of the second control resource set. The first control resource set includes detecting a physical downlink control channel PDCCH candidate used for scheduling a system information block 1 (SIB1). The PDCCH is a PDCCH sent by a network device to schedule the SIB1. The quantity of RBs of the first control resource set in frequency domain is less than a minimum quantity of RBs of the second control resource set in frequency domain.

The processing unit is configured to start to detect the PDCCH at the frequency domain start position of the first control resource set.

In a possible implementation, the first bandwidth is less than the second bandwidth, and the second bandwidth includes the first bandwidth.

In another possible implementation, the quantity of RBs occupied by the first control resource set in frequency domain is less than 24.

In another possible implementation, the quantity of RBs occupied by the first control resource set in frequency domain is one of 12, 15, 16, 18, and 20.

In another possible implementation, a subcarrier spacing corresponding to the first control resource set is 15 kilohertz kHz.

In another possible implementation, a first offset offset corresponding to the first control resource set is different from a second offset offset corresponding to the second control resource set. The first offset is an offset between an SSB obtained through frequency domain alignment and a frequency domain lower boundary of the first control resource set. The second offset is an offset between the SSB obtained through frequency domain alignment and a frequency domain lower boundary of the second control resource set.

In another possible implementation, the first offset offset is less than 0.

In another possible implementation, the first offset offset is one of -4 RBs, -3 RBs, -2 RBs, -1 RB, and 0 RBs.

In another possible implementation, a quantity of time domain symbols of the first control resource set is 3.

For technical effects brought by the seventh aspect or the possible implementations, refer to the descriptions of the technical effects brought by the third aspect or the corresponding implementations.

According to an eighth aspect, an embodiment of this application discloses a communication apparatus, including a processing unit and a communication unit.

The communication unit is configured to send, to a terminal device within a first bandwidth, a physical downlink control channel PDCCH candidate used for scheduling a system information block 1 (SIB1). The PDCCH belongs to a first control resource set within the first bandwidth. A quantity of resource blocks RBs occupied by the first control resource set in frequency domain within the first bandwidth is less than a quantity of RBs occupied by a second control resource set in frequency domain within a second bandwidth. A frequency domain start position of the first control resource set within the first bandwidth is used by the terminal device to detect the PDCCH.

In a possible implementation, the first bandwidth is less than the second bandwidth, and the second bandwidth includes the first bandwidth.

In another possible implementation, the quantity of RBs occupied by the first control resource set in frequency domain is less than 24.

In another possible implementation, the quantity of RBs occupied by the first control resource set in frequency domain is one of 12, 15, 16, 18, and 20.

In another possible implementation, a subcarrier spacing corresponding to the first control resource set is 15 kilohertz kHz.

In another possible implementation, a first offset offset corresponding to the first control resource set is different from a second offset offset corresponding to the second control resource set. The first offset is an offset between an SSB obtained through frequency domain alignment and a frequency domain lower boundary of the first control resource set. The second offset is an offset between the SSB obtained through frequency domain alignment and a frequency domain lower boundary of the second control resource set.

In another possible implementation, the first offset offset is less than 0.

In another possible implementation, the first offset offset is one of -4 RBs, -3 RBs, -2 RBs, -1 RB, and 0 RBs.

In another possible implementation, a quantity of time domain symbols of the first control resource set is 3.

For technical effects brought by the eighth aspect or the possible implementations, refer to the descriptions of the technical effects brought by the fourth aspect or the corresponding implementations.

According to a ninth aspect, an embodiment of this application discloses a communication apparatus. The apparatus includes at least one processor and a communication interface. The at least one processor is configured to invoke a computer program or instructions stored in a memory to perform the following operations:

determining a frequency domain start position of a control resource set, where the control resource set includes detecting a physical downlink control channel PDCCH candidate used for scheduling a system information block 1 (SIB1), and the PDCCH is a PDCCH sent by a network device to schedule the SIB 1;

determining, in the control resource set, a control channel element CCE index included in a PDCCH within a first bandwidth and a CCE index included in a PDCCH within a second bandwidth, where an offset exists between the CCE index within the first bandwidth and the CCE index within the second bandwidth; and

detecting the PDCCH based on the CCE index included in the PDCCH within the first bandwidth in the control resource set.

In a possible implementation, the 1st CCE index in the CCE index within the second bandwidth is a CCE index 0, and a frequency domain start position of the CCE index 0 is the frequency domain start position of the control resource set.

In another possible implementation, the first bandwidth is less than the second bandwidth, and the second bandwidth includes the first bandwidth.

In another possible implementation, the processor is configured to determine that a CCE-to-resource element group REG mapping relationship within the first bandwidth in the control resource set is a non-interleaved mapping relationship.

In another possible implementation, the processor is configured to receive, through the communication interface, first indication information from the network device. The first indication information indicates that the CCE-to-REG mapping relationship within the first bandwidth in the control resource set is the non-interleaved mapping relationship.

In another possible implementation, the offset between the CCE index within the first bandwidth and the CCE index within the second bandwidth is related to a first parameter. The first parameter is an offset offset between a synchronization signal block SSB obtained through frequency domain alignment and a frequency domain lower boundary of a control resource set corresponding to a CCE within the second bandwidth.

In another possible implementation, a quantity of time domain symbols of the control resource set is 2.

In another possible implementation, the processor is configured to determine that a CCE-to-REG mapping relationship within the first bandwidth in the control resource set is an interleaved mapping relationship.

In another possible implementation, the processor is configured to receive, through the communication interface, second indication information from the network device. The second indication information indicates that the CCE-to-REG mapping relationship within the first bandwidth in the control resource set is the interleaved mapping relationship.

For technical effects brought by the ninth aspect or the possible implementations, refer to the descriptions of the technical effects brought by the first aspect or the corresponding implementations.

According to a tenth aspect, an embodiment of this application discloses a communication apparatus. The apparatus includes at least one processor and a communication interface. The at least one processor is configured to invoke a computer program or instructions stored in a memory to perform the following operation:

sending, to a terminal device within a first bandwidth, a physical downlink control channel PDCCH candidate used for scheduling a system information block 1 (SIB1), where the PDCCH belongs to a control resource set, in the control resource set, a control channel element CCE index included in a PDCCH within the first bandwidth is different from a CCE index included in a PDCCH within a second bandwidth, and an offset exists between the CCE index within the first bandwidth and the CCE index within the second bandwidth. The CCE index included in the PDCCH within the first bandwidth in the control resource set is used by the terminal device to detect the PDCCH.

In a possible implementation, the 1st CCE index in the CCE index within the second bandwidth is a CCE index 0, and a frequency domain start position of the CCE index 0 is a frequency domain start position of the control resource set.

In another possible implementation, the first bandwidth is less than the second bandwidth, and the second bandwidth includes the first bandwidth.

In another possible implementation, the processor is configured to send, through the communication interface, first indication information to the terminal device. The first indication information indicates that a CCE-to-REG mapping relationship within the first bandwidth in the control resource set is a non-interleaved mapping relationship.

In another possible implementation, the offset between the CCE index within the first bandwidth and the CCE index within the second bandwidth is related to a first parameter. The first parameter is an offset offset between a synchronization signal block SSB obtained through frequency domain alignment and a frequency domain lower boundary of a control resource set corresponding to a CCE within the second bandwidth.

In another possible implementation, a quantity of time domain symbols of the control resource set is 2.

In another possible implementation, the processor is configured to send, through the communication interface, second indication information to the terminal device. The first indication information indicates that a CCE-to-REG mapping relationship within the first bandwidth in the control resource set is a non-interleaved mapping relationship.

For technical effects brought by the tenth aspect or the possible implementations, refer to the descriptions of the technical effects brought by the second aspect or the corresponding implementations.

According to an eleventh aspect, an embodiment of this application discloses a communication apparatus. The apparatus includes at least one processor and a communication interface. The at least one processor is configured to invoke a computer program or instructions stored in a memory to perform the following operations:

determining a quantity of resource blocks RBs occupied by a first control resource set in frequency domain within a first bandwidth and a frequency domain start position of the first control resource set, and a quantity of RBs occupied by a second control resource set in frequency domain within a second bandwidth and a frequency domain start position of the second control resource set, where the first control resource set includes detecting a physical downlink control channel PDCCH candidate used for scheduling a system information block 1 (SIB1), and the PDCCH is a PDCCH sent by a network device to schedule the SIB1, where the quantity of RBs of the first control resource set in frequency domain is less than a minimum quantity of RBs of the second control resource set in frequency domain; and

starting to detect the PDCCH at the frequency domain start position of the first control resource set.

In a possible implementation, the first bandwidth is less than the second bandwidth, and the second bandwidth includes the first bandwidth.

In another possible implementation, the quantity of RBs occupied by the first control resource set in frequency domain is less than 24.

In another possible implementation, the quantity of RBs occupied by the first control resource set in frequency domain is one of 12, 15, 16, 18, and 20.

In another possible implementation, a subcarrier spacing corresponding to the first control resource set is 15 kilohertz kHz.

In another possible implementation, a first offset offset corresponding to the first control resource set is different from a second offset offset corresponding to the second control resource set. The first offset is an offset between an SSB obtained through frequency domain alignment and a frequency domain lower boundary of the first control resource set. The second offset is an offset between the SSB obtained through frequency domain alignment and a frequency domain lower boundary of the second control resource set.

In another possible implementation, the first offset offset is less than 0.

In another possible implementation, the first offset offset is one of -4 RBs, -3 RBs, -2 RBs, -1 RB, and 0 RBs.

In another possible implementation, a quantity of time domain symbols of the first control resource set is 3.

For technical effects brought by the eleventh aspect or the possible implementations, refer to the descriptions of the technical effects brought by the third aspect or the corresponding implementations.

According to a twelfth aspect, an embodiment of this application discloses a communication apparatus. The apparatus includes at least one processor and a communication interface. The at least one processor is configured to invoke a computer program or instructions stored in a memory to perform the following operation:

sending, to a terminal device within a first bandwidth, a physical downlink control channel PDCCH candidate used for scheduling a system information block 1 (SIB1), where the PDCCH belongs to a first control resource set within the first bandwidth, a quantity of resource blocks RBs occupied by the first control resource set in frequency domain within the first bandwidth is less than a quantity of RBs occupied by a second control resource set in frequency domain within a second bandwidth, and a frequency domain start position of the first control resource set within the first bandwidth is used by the terminal device to detect the PDCCH.

In a possible implementation, the first bandwidth is less than the second bandwidth, and the second bandwidth includes the first bandwidth.

In another possible implementation, the quantity of RBs occupied by the first control resource set in frequency domain is less than 24.

In another possible implementation, the quantity of RBs occupied by the first control resource set in frequency domain is one of 12, 15, 16, 18, and 20.

In another possible implementation, a subcarrier spacing corresponding to the first control resource set is 15 kilohertz kHz.

In another possible implementation, a first offset offset corresponding to the first control resource set is different from a second offset offset corresponding to the second control resource set. The first offset is an offset between an SSB obtained through frequency domain alignment and a frequency domain lower boundary of the first control resource set. The second offset is an offset between the SSB obtained through frequency domain alignment and a frequency domain lower boundary of the second control resource set.

In another possible implementation, the first offset offset is less than 0.

In another possible implementation, the first offset offset is one of -4 RBs, -3 RBs, -2 RBs, and -1 RB.

In another possible implementation, a quantity of time domain symbols of the first control resource set is 3.

For technical effects brought by the twelfth aspect or the possible implementations, refer to the descriptions of the technical effects brought by the fourth aspect or the corresponding implementations.

According to a thirteenth aspect, an embodiment of this application discloses a chip system. The chip system includes at least one processor and an interface circuit. The at least one processor is configured to execute a computer program or instructions, to implement the method according to any one of the foregoing aspects.

According to a fourteenth aspect, an embodiment of this application discloses a computer-readable storage medium. The computer-readable storage medium stores computer instructions; and when the computer instructions are run on a processor, the method according to any one of the foregoing aspects is implemented.

According to a fifteenth aspect, an embodiment of this application discloses a computer program product. The computer program product includes computer program code; and when the computer program code is run on a computer, the method according to any one of the foregoing aspects is implemented.

## BRIEF DESCRIPTION OF DRAWINGS

The following describes the accompanying drawings used in embodiments of this application.

FIG. 1 is a schematic diagram of a structure of a communication system according to an embodiment of this application;

FIG. 2 is a schematic diagram of non-interleaved CCE-to-REG mapping according to an embodiment of this application;

FIG. 3 is a schematic diagram of a mapping relationship of interleaved CCE-to-REG mapping according to an embodiment of this application;

FIG. 4 is a schematic diagram of interleaved CCE-to-REG mapping according to an embodiment of this application;

FIG. 5 is a schematic diagram of a dedicated network spectrum according to an embodiment of this application;

FIG. 6 is a schematic diagram of CCE-to-REG mapping according to an embodiment of this application;

FIG. 7 is a schematic diagram of transmission of a PDCCH candidate according to an embodiment of this application;

FIG. 8 is a schematic diagram of a communication method according to an embodiment of this application;

FIG. 9 is a schematic diagram of a first bandwidth and a second bandwidth according to an embodiment of this application;

FIG. 10 is a schematic diagram of non-interleaved CCE-to-REG mapping according to an embodiment of this application;

FIG. 11(a) to FIG. 11(c) are schematic diagrams of interleaved CCE-to-REG mapping according to an embodiment of this application;

FIG. 12 is a schematic diagram of non-interleaved CCE-to-REG mapping according to an embodiment of this application;

FIG. 13(a) to FIG. 13(c) are schematic diagrams of non-interleaved CCE-to-REG mapping according to an embodiment of this application;

FIG. 14(a) to FIG. 14(c) are schematic diagrams of non-interleaved CCE-to-REG mapping according to an embodiment of this application;

FIG. 15 is a schematic diagram of a communication method according to an embodiment of this application;

FIG. 16 is a schematic diagram of non-interleaved CCE-to-REG mapping according to an embodiment of this application;

FIG. 17(a) to FIG. 17(c) are schematic diagrams of interleaved CCE-to-REG mapping according to an embodiment of this application;

FIG. 18(a) to FIG. 18(c) are schematic diagrams of interleaved CCE-to-REG mapping according to an embodiment of this application;

FIG. 19 is a schematic diagram of a structure of a communication apparatus according to an embodiment of this application; and

FIG. 20 is a schematic diagram of a structure of a communication apparatus according to an embodiment of this application.

## DESCRIPTION OF EMBODIMENTS

The following describes embodiments of this application with reference to the accompanying drawings in embodiments of this application.

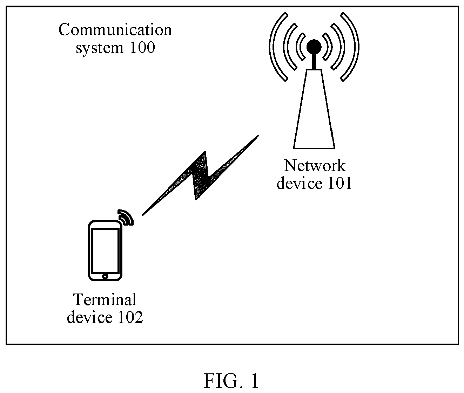

FIG. 1 is a schematic diagram of a structure of a communication system 100 according to an embodiment of this application. The communication system 100 includes a network device 101 and a terminal device 102. The network device 101 may send information to the terminal device 102 through a downlink channel, and the terminal device 102 may send information to the network device 101 through an uplink channel. FIG. 1 is merely an example for descriptions. The communication system may further include more network devices and more terminal devices. This is not limited in this embodiment of this application.

(1) A terminal device includes a device that provides voice and/or data connectivity for a user, and specifically, includes a device that provides voice for a user, or includes a device that provides data connectivity for a user, or includes a device that provides voice and data connectivity for a user. For example, a hand-held device with a wireless connection function or a processing device connected to a wireless modem may be included. The terminal device may communicate with a core network through a radio access network (radio access network, RAN), and exchange voice or data with the RAN, or interact voice and data with the RAN. The terminal device may include user equipment (user equipment, UE), a wireless terminal device, a mobile terminal device, a D2D terminal device, a vehicle-to-everything (vehicle-to-everything, V2X) terminal device, a machine-to-machine/machine-type communication (machine-to-machine/machine-type communication, M2M/MTC) terminal device, an internet of things (internet of things, IoT) terminal device, light terminal device (light UE), reduced capability UE (reduced capability UE, REDCAP UE), a subscriber unit (subscriber unit), a subscriber station (subscriber station), a mobile station (mobile station), a remote station (remote station), an access point (access point, AP), a remote terminal (remote terminal), an access terminal (access terminal), a user terminal (user terminal), a user agent (user agent), a user device (user device), or the like. For example, the terminal device may include a mobile phone (which is also referred to as a "cellular" phone), a computer having a mobile terminal device, or a portable, pocket-sized, hand-held, computer-embedded mobile apparatus, or the like. For example, the terminal device may be a device, such as a personal communication service (personal communication service, PCS) phone, a cordless telephone, a session initiation protocol (session initiation protocol, SIP) phone, a wireless local loop (wireless local loop, WLL) station, or a personal digital assistant (personal digital assistant, PDA). The terminal device may alternatively include a limited device, for example, a device with low power consumption, a device with a limited storage capability, or a device with a limited computing capability. For example, the terminal device includes an information sensing device such as a barcode, radio frequency identification (radio frequency identification, RFID), a sensor, a global positioning system (global positioning system, GPS), or a laser scanner.

By way of example, and not limitation, in this embodiment of this application, the terminal device may alternatively be a wearable device. The wearable device may also be referred to as a wearable smart device, a smart wearable device, or the like, and is a general term of wearable devices, for example, glasses, gloves, watches, clothes, and shoes that are intelligently designed and developed for daily wear by using a wearable technology. The wearable device is a portable device that can be directly worn on the body or integrated into clothes or an accessory of a user. The wearable device is not only a hardware device, but also implements a powerful function through software support, data exchange, and cloud interaction. In a broad sense, the wearable smart device includes a full function, a large size, and a function that can be partially or completely implemented without depending on a smartphone, for example, smart watches or smart glasses, and devices such as various smart bands, smart helmets, or smart jewelry for monitoring physical signs, that focus on only one type of application function and that need to work with other devices such as smartphones.

If the various terminal devices described above are located in a vehicle (for example, placed in the vehicle or installed in the vehicle), the terminal devices may be all considered as vehicle-mounted terminal devices. For example, the vehicle-mounted terminal devices are also referred to as on-board units (on-board units, OBUs).

(2) A network device includes, for example, an access network (access network, AN) device such as a base station (for example, an access point), and may be a device that communicates with, by using one or more cells, a wireless terminal device over an air interface in the access network. Alternatively, the network device is, for example, a road side unit (road side unit, RSU) in a vehicle-to-everything (vehicle-to-everything, V2X) technology. The base station may be configured to perform mutual conversion between a received over-the-air frame and an IP packet, to serve as a router between the terminal device and a remaining part of the access network. The remaining part of the access network may include an IP network. The RSU may be a fixed infrastructure entity supporting a V2X application, and may exchange a message with another entity supporting the V2X application. The network device may further coordinate attribute management of the air interface. For example, the network device may include an evolutional NodeB (NodeB, eNB, or eNodeB, evolved NodeB) in a long term evolution (long term evolution, LTE) system or a long term evolution-advanced (long term evolution-advanced, LTE-A) system, may include a next generation NodeB (next generation NodeB, gNB) in the 5th generation (the 5th generation, 5G) mobile communication technology NR system (which is also referred to as an NR system for short), or may include a central unit (central unit, CU) and a distributed unit (distributed unit, DU) in a cloud radio access network (cloud radio access network, Cloud RAN) system. This is not limited in embodiments of this application.

The network device may further include a core network device. The core network device includes, for example, an access and mobility management function (access and mobility management function, AMF), a user plane function (user plane function, UPF), or a session management function (session management function, SMF).

Some terms in this application are first described and explained, to help a person skilled in the art have a better understanding.

The terminal device detects a PDCCH at a candidate PDCCH position in a configured CORESET 0 based on an aggregation level, where the aggregation level indicates a quantity of CCEs allocated to the PDCCH. In a process of initially accessing a network, the terminal device needs to first receive an SSB. The SSB is used for carrying a time-frequency domain resource of an access-related signal channel, for example, a synchronization signal, a physical broadcast channel (physical broadcast channel, PBCH), and a corresponding demodulation reference signal (demodulation reference signal, DMRS). A master information block (master information block, MIB) 1 carried on the PBCH includes configuration information of a CORESET 0, and the configuration information of the CORESET 0 includes: a quantity of time domain symbols of the CORESET 0, a quantity of resource blocks (resource blocks, RBs) occupied by the CORESET 0 in frequency domain, and an offset offset between a CORESET 0 obtained through frequency domain alignment and a frequency domain lower boundary of an SSB. The CORESET 0 is used for carrying a Type 0-PDCCH, and may further carry configuration information of an SIB1. After receiving the SSB, the terminal device may obtain the configuration information of the corresponding CORESET 0 based on indication information in the MIB 1. The terminal device detects the PDCCH in the CORESET 0 at a candidate physical downlink control channel (physical downlink control channel, PDCCH) position, where downlink control information (downlink control information, DCI) carried on the PDCCH is used for scheduling transmission of the system information block 1 (system information block 1, SIB1), and then the terminal device receives the SIB1 in the CORESET 0 and demodulates the SIB1. As shown in Table 1, when a subcarrier spacing SCS of the SSB is 15 kilohertz (kHz), and a subcarrier spacing SCS of the PDCCH is 15 kilohertz (kHz), the CORESET 0 occupies 24 RBs, 48 RBs, or 96 RBs in frequency domain. When the CORESET 0 occupies 24 RBs in frequency domain, the quantity of time domain symbols of the CORESET 0 is 2 or 3, and the offset offset between the CORESET 0 obtained through frequency domain alignment and the frequency domain lower boundary of the SSB. In other words, an offset of the frequency domain of the CORESET 0 is 0 RBs, 2 RBs, or 4 RBs.

**Table 1**

| Index sequence number | SSB and CORESET 0 multiplexing pattern | Quantity $N_{RB}^{CORESET}$ of RBs occupied in frequency domain | Quantity $N_{symb}^{CORESET}$ of time symb domain symbols | Offset offset (RBs) |
|---|---|---|---|---|
| 0 | 1 | 24 | 2 | 0 |
| 1 | 1 | 24 | 2 | 2 |
| 2 | 1 | 24 | 2 | 4 |
| 3 | 1 | 24 | 3 | 0 |
| 4 | 1 | 24 | 3 | 2 |
| 5 | 1 | 24 | 3 | 4 |
| 6 | 1 | 48 | 1 | 12 |
| 7 | 1 | 48 | 1 | 16 |
| 8 | 1 | 48 | 2 | 12 |
| 9 | 1 | 48 | 2 | 16 |
| 10 | 1 | 48 | 3 | 12 |
| 11 | 1 | 48 | 3 | 16 |
| 12 | 1 | 96 | 1 | 38 |
| 13 | 1 | 96 | 2 | 38 |
| 14 | 1 | 96 | 3 | 38 |
| 15 | Reserved | | | |

Currently, the PDCCH transmitted in the CORESET 0 is a PDCCH that is sent and that includes control channel elements (control channel elements, CCEs) at a specific aggregation level. One CCE includes a plurality of resource element groups (resource element groups, REGs). One REG occupies one RB in frequency domain, and occupies one orthogonal frequency division multiplexing (orthogonal frequency division multiplexing, OFDM) symbol in time domain. One REG bundle (bundle) includes L REGs, where L may be 1, 2, or 6.

There are two CCE-to-REG mapping manners: non-interleaved mapping and interleaved mapping. Details are as follows.

(1) Non-interleaved mapping: A relationship between the CCE and the REG bundle may be described as follows. A sequence number of a REG included in the ith REG bundle is {iL, iL + 1, ..., iL + L - 1}, where L is a quantity of REGs included in the REG bundle, and $i = 0, 1, ..., N_{REG}^{CORESET}/L - 1$, where

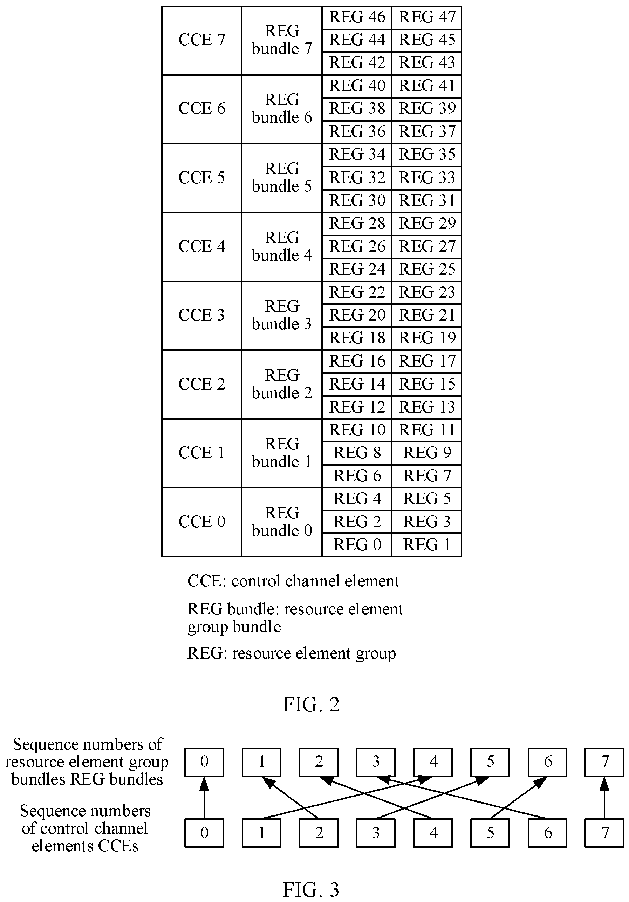

$$N_{REG}^{CORESET} = N_{RB}^{CORESET} * N_{symb}^{CORESET}$$, where $N_{RB}^{CORESET}$ is the quantity of RBs occupied by the CORESET 0 in frequency domain, $N_{symb}^{CORESET}$ is the quantity of time domain symbols of the CORESET 0, and $N_{REG}^{CORESET}$ is a quantity of REGs included in the CORESET 0. A sequence number of a REG bundle included in the j$^{th}$ CCE is {f(6j/L), f(6j/L + 1), ... , f(6j/L + 6/L + 1)}, where f(.) represents a mapping function. For example, a CCE-to-REG mapping manner is non-interleaved mapping, where L=6, and the mapping function is f(x) = x. As shown in FIG. 2, the quantity of time domain symbols of the CORESET 0 is 2, the quantity of RBs occupied by the CORESET 0 in frequency domain is 24, and every six REGs form one REG bundle. A CCE 0 is mapped to a REG bundle 0, a CCE 1 is mapped to a REG bundle 1, ..., and a CCE 7 is mapped to a REG bundle 7.

(2) Interleaved mapping: When the quantity of time domain symbols of the CORESET 0 is 2, the quantity L of REGs included in the REG bundle may be 2 or 6. When the quantity of time domain symbols of the CORESET 0 is 3, the quantity L of REGs included in the REG bundle may be 3 or 6. A mapping function formula of the interleaved CCE-to-REG mapping is:

$$f(x) = (rC + c + n_{\text{shift}}) \mod (N_{\text{REG}}^{\text{CORESET}}/L);$$

$$x = cR + r;$$

$$r = 0, 1, \dots, R - 1;$$

$$c = 0, 1, \dots, C - 1;$$

and

$$C = N_{\text{REG}}^{\text{CORESET}}/(LR).$$

R is 2, 3, or 6, and represents a row quantity of rectangles that are interleaved, $n_{\text{shift}}$ represents an offset parameter of an interleaver, $N_{\text{REG}}^{\text{CORESET}}$ is the quantity of REGs included in the CORESET 0, C is a column quantity of the interleaver, L is the quantity of REGs included in the REG bundle, and mod(.) represents a modulo function.

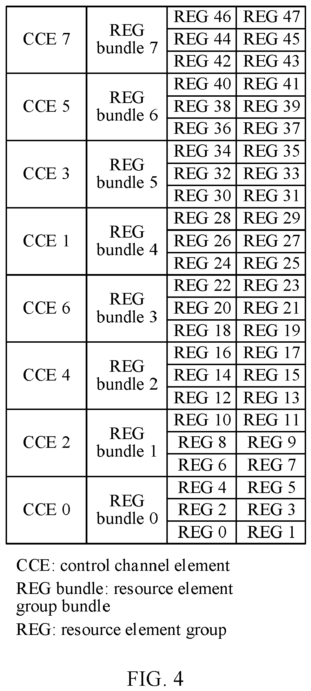

For example, when the quantity of time domain symbols of the CORESET 0 is 2, the quantity of RBs occupied by the CORESET 0 in frequency domain is 24, and every six REGs form one REG bundle. A row quantity of the interleaver is 2, the column quantity of the interleaver is (2*24/6)/2=4, and it is determined that an interleaving table is shown in Table 2, where the table is orchestrated in a row-in and column-out form. Sequence numbers of REG bundles are read as 0, 4, 1, 5, 2, 6, 3, and 7, and sequence numbers of CCEs corresponding to the REG bundles are 0, 1, 2, 3, 4, 5, 6, and 7. As shown in FIG. 3, a mapping relationship between the sequence numbers of the REG bundles and the sequence numbers of the CCEs is as follows: A CCE 0 is mapped to a REG bundle 0, a CCE 1 is mapped to a REG bundle 4, a CCE 2 is mapped to a REG bundle 1, a CCE 3 is mapped to a REG bundle 5, ..., and a CCE 7 is mapped to a REG bundle 7. The quantity of time domain symbols of the CORESET 0 is 2, the quantity of RBs occupied by the CORESET 0 in frequency domain is 24, and a pattern of the interleaved CCE-to-REG mapping in the CORESET 0 is shown in FIG. 4.

**Table 2**

| 0 | 1 | 2 | 3 |
|---|---|---|---|
| 4 | 5 | 6 | 7 |

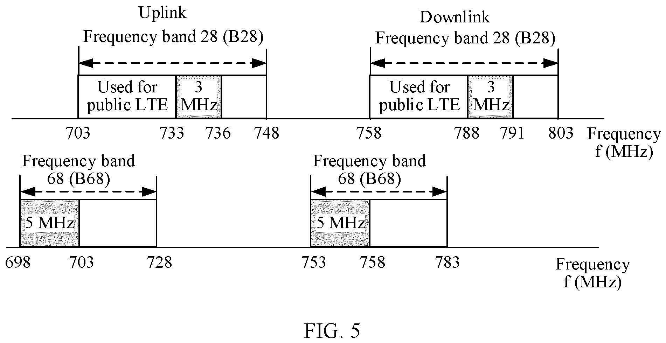

Currently, in a limited dedicated bandwidth, for example, a frequency division duplex (frequency division duplex, FDD) frequency band of 3.6 MHz in a European railway dedicated network and a public safety network of 3 MHz, when a subcarrier spacing SCS is equal to 15 kHz, 3 MHz can only support transmission of data of a maximum of 16 RBs in frequency domain. As shown in FIG. 5, in the limited dedicated bandwidth, a network device may send broadcast information such as a complete synchronization signal block and a system information block.

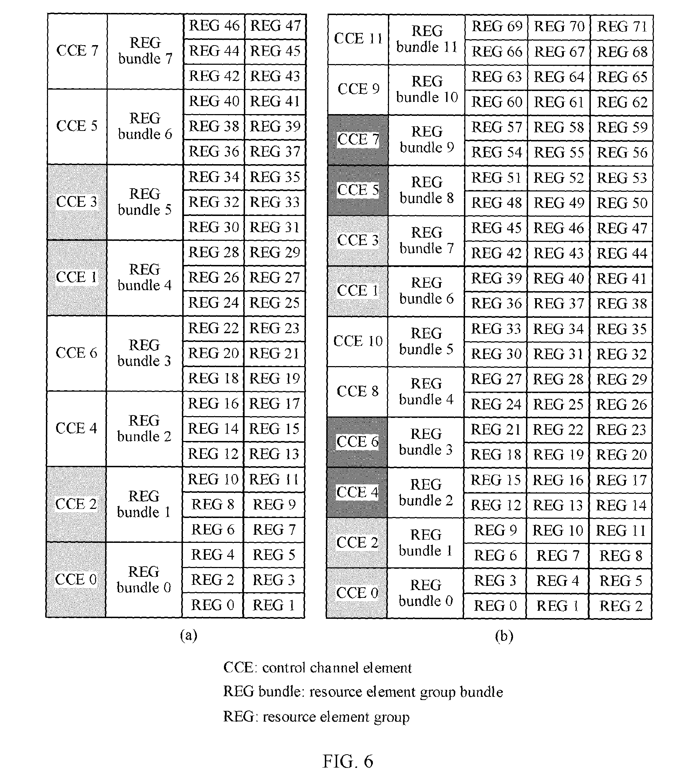

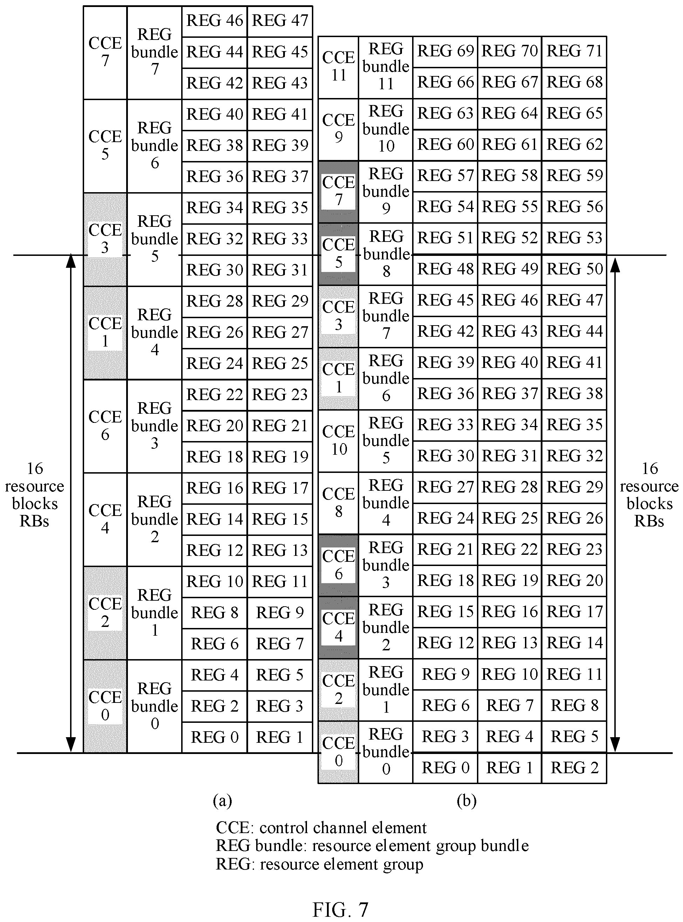

In an NR protocol, transmission of PDCCHs of aggregation levels of 4, 8, and 16 in the CORESET 0 is supported. In NR, the transmitted PDCCHs support only the interleaved CCE-to-REG mapping manner. During interleaved mapping, only a case in which the row quantity R of the interleaver is equal to 2 is supported. According to this manner of limiting the interleaver, CCE-to-REG mapping in the CORESET 0 may be shown in FIG. 6. For a case of the aggregation level of 4, in (a) in FIG. 6, {CCE 0, CCE 1, CCE 2, CCE 3} is a PDCCH candidate, and {CCE 4, CCE 5, CCE 6, CCE 7} is a PDCCH candidate. In (b) in FIG. 6, {CCE 0, CCE 1, CCE 2, CCE 3} is a PDCCH candidate, {CCE 4, CCE 5, CCE 6, CCE 7} is a PDCCH candidate, and {CCE 8, CCE 9, CCE 10, CCE 11} is a PDCCH candidate. When a network bandwidth is limited to 16 RBs, a PDCCH candidate at the aggregation level of 4 cannot be completely sent. As shown in (a) in FIG. 7, in a limited bandwidth of 3 MHz, in the PDCCH candidate at the aggregation level of 4, only {CCE 0, CCE 1, CCE 2} can be completely sent, and the CCE3 cannot be completely sent. As shown in (b) in FIG. 7, in the limited bandwidth of 3 MHz, in a transmitted PDCCH candidate at the aggregation level of 4, only {CCE 1, CCE 2, CCE 3} can be completely sent, and the CCE0 cannot be completely sent. Therefore, to resolve the foregoing problem, embodiments of this application provide the following solutions.

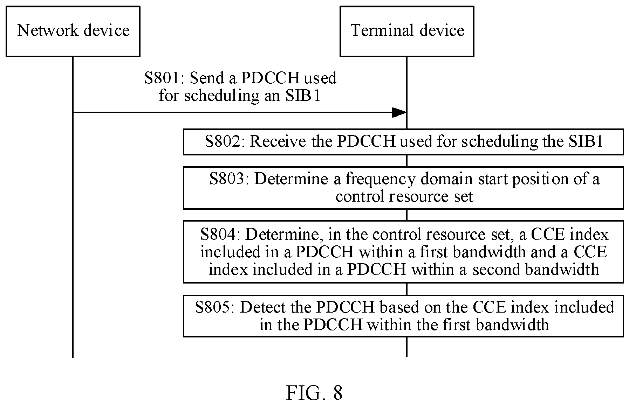

FIG. 8 shows a communication method according to an embodiment of this application. The method includes but not limited to the following steps.

Step S801: A network device sends, to a terminal device, a PDCCH used for scheduling an SIB1.

Specifically, the PDCCH used for scheduling the SIB 1 is defined as a Type 0-PDCCH. The PDCCH includes CCEs at a preset aggregation level. In an example, the preset aggregation level may be 4. The PDCCH may be understood as a PDCCH candidate, and may be a Type 0-PDCCH candidate in a CORESET 0. In the following embodiment, the Type 0-PDCCH candidate is referred to as the Type 0-PDCCH for short, in other words, the Type 0-PDCCH may include 4 CCEs. The PDCCH belongs to a control resource set. In this embodiment of this application, the control resource set may be a control resource set 0 (CORESET 0), namely, a control resource set corresponding to the Type 0-PDCCH. The control resource set is used for detecting the PDCCH used for scheduling the SIB1, that is, is used for detecting the Type 0-PDCCH. The PDCCH corresponds to a first bandwidth. In other words, the network device sends, to the terminal device within the first bandwidth, the PDCCH used for scheduling the SIB1. In this embodiment of this application, unless otherwise specified, the PDCCH is one of Type 0-PDCCH candidates in the CORESET 0.

Step S802: The terminal device receives, from the network device, the PDCCH used for scheduling the SIB 1.

Step S803: The terminal device determines a frequency domain start position of the control resource set.

The frequency domain start position of the control resource set is a frequency domain start position of a CCE index 0, and the CCE index 0 is the 1st CCE index in a CCE index included in a PDCCH within a second bandwidth. In other words, that the terminal device determines the frequency domain start position of the control resource set may refer to that the terminal device determines the 1st CCE index in the CCE index included in the PDCCH within the second bandwidth, namely, the frequency domain start position of the CCE index 0.

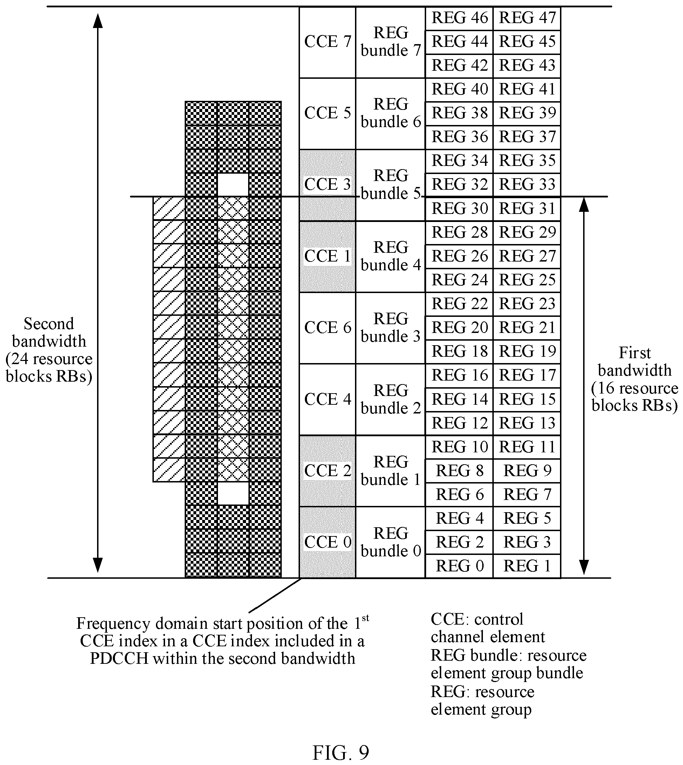

Specifically, the CCE index included in the PDCCH within the second bandwidth may be determined based on a manner in which a CCE-to-REG mapping relationship within the second bandwidth is interleaved mapping, an interleaver whose R is equal to 2, the configuration information that is of the CORESET 0 and that is shown in Table 1, and a calculation formula of the CCE index included in the PDCCH within the second bandwidth. In an example, it is assumed that the terminal device receives, from the network device, the configuration information of the CORESET 0. The configuration information of the CORESET 0 includes an SSB and CORESET 0 multiplexing pattern, a quantity of time domain symbols of the CORESET 0, a quantity of RBs occupied by the CORESET 0 in frequency domain, and an offset offset between a CORESET 0 obtained through frequency domain alignment and a frequency domain lower boundary of an SSB. Therefore, it is determined that the SSB and CORESET 0 multiplexing pattern is 1, the quantity of time domain symbols of the CORESET 0 is 2, the quantity of RBs occupied in frequency domain is 24, and an offset offset is 0. In this case, as shown in FIG. 9, the terminal device determines the 1st CCE index in the CCE index included in the PDCCH within the second bandwidth, in other words, the CCE index 0 is located in the 1st RB within the second bandwidth. The CCE index included in the PDCCH within the second bandwidth is used by the terminal device to detect the PDCCH within the second bandwidth, that is, a PDCCH corresponding to a CCE within the second bandwidth.

Step S804: The terminal device determines, in the control resource set, a CCE index included in a PDCCH within the first bandwidth and the CCE index included in the PDCCH within the second bandwidth.

Specifically, the CCE index included in the PDCCH within the first bandwidth may be a CCE index included in the Type 0-PDCCH in the CORESET 0 within the first bandwidth, and the CCE index may be a CCE index set. The CCE index included in the PDCCH within the second bandwidth may be a CCE index included in the Type 0-PDCCH in the CORESET 0 within the second bandwidth, and the CCE index may be a CCE index set.

Specifically, the first bandwidth is less than the second bandwidth, and the second bandwidth includes the first bandwidth. The first bandwidth is a narrow bandwidth, and the second bandwidth is a wide bandwidth. In an example, the first bandwidth is less than 5 MHz, for example, the first bandwidth is 3 MHz, and the second bandwidth is greater than 5 MHz. For example, as shown in FIG. 9, the first bandwidth occupies 16 RBs at a subcarrier spacing of 15 kHz, and the second bandwidth occupies 24 RBs at a subcarrier spacing of 15 kHz.

Specifically, that an offset exists between the CCE index within the first bandwidth and the CCE index within the second bandwidth may be understood as that an offset exists between the Xth CCE index in the CCE index included in the PDCCH within the first bandwidth and the corresponding Xth CCE index in the CCE index included in the PDCCH within the second bandwidth, where X is related to an aggregation level. For example, in an example, the aggregation level is 4, the PDCCH within the first bandwidth includes four CCEs, and the PDCCH within the second bandwidth includes four CCEs. In this case, an offset exists between the 1st CCE index in the CCE index included in the PDCCH within the first bandwidth and the 1st CCE index in the CCE index included in the PDCCH within the second bandwidth. An offset exists between the 2nd CCE index in the CCE index included in the PDCCH within the first bandwidth and the 2nd CCE index in the CCE index included in the PDCCH within the second bandwidth. By analogy, an offset exists between the 4th CCE index in the CCE index included in the PDCCH within the first bandwidth and the 4th CCE index in the CCE index included in the PDCCH within the second bandwidth.

Specifically, before the terminal device determines, in the control resource set, the CCE index included in the PDCCH within the first bandwidth, the terminal device determines a CCE-to-REG mapping relationship within the first bandwidth in the control resource set, that is, a CCE-to-REG mapping relationship in the CORESET 0 corresponding to the PDCCH within the first bandwidth. Specifically, there are the following two cases.

Case 1: The terminal device determines that the CCE-to-REG mapping relationship within the first bandwidth in the control resource set is a non-interleaved mapping relationship. The terminal device may receive first indication information from the network device. The first indication information indicates that the CCE-to-REG mapping relationship within the first bandwidth in the control resource set is the non-interleaved mapping relationship. Alternatively, that the CCE-to-REG mapping relationship within the first bandwidth in the control resource set is the non-interleaved mapping relationship may be predefined in a protocol. For example, in at least one of a specific frequency band, a specific frequency band number, and a specific frequency band range predefined in the protocol, the CCE-to-REG mapping relationship within the first bandwidth in the control resource set is the non-interleaved mapping relationship.

Case 2: The terminal device determines that the CCE-to-REG mapping relationship within the first bandwidth in the control resource set is an interleaved mapping relationship. The terminal device may receive second indication information from the network device. The second indication information indicates that the CCE-to-REG mapping relationship within the first bandwidth in the control resource set is the interleaved mapping relationship. Alternatively, that the CCE-to-REG mapping relationship within the first bandwidth in the control resource set is the interleaved mapping relationship may be predefined in a protocol. Alternatively, on a specific frequency band or a frequency band corresponding to a specific frequency band number, that the CCE-to-REG mapping relationship within the first bandwidth in the control resource set is the interleaved mapping relationship is predefined in the protocol.

The first indication information and the second indication information may be included in the configuration information of the CORESET 0. Certainly, the CCE-to-REG mapping relationship within the first bandwidth in the control resource set may alternatively be configured by using higher layer signaling.

When the terminal device determines that the CCE-to-REG mapping relationship within the first bandwidth in the control resource set is the non-interleaved mapping relationship, a quantity of time domain symbols of the control resource set is 2.

After the terminal device determines the CCE-to-REG mapping relationship within the first bandwidth in the control resource set, the terminal device determines, in the control resource set, the CCE index included in the PDCCH within the first bandwidth, in other words, may determine, in the following manners, the CCE index included in the Type 0-PDCCH in the CORESET 0 within the first bandwidth.

Manner 1: The terminal device determines a parameter off1 in a calculation formula (1), determines, based on the calculation formula, a CCE index set included in the Type 0-PDCCH within the first bandwidth, and determines, based on the CCE index set included in the Type 0-PDCCH, a frequency domain start position of the 1st CCE that is detected. The calculation formula is specifically shown in the formula (1):

$$CCE\_index = L \cdot \left\{ \left( Y_{p,n_{s,f}^{\mu}} + \left\lfloor \frac{m_{s,n_{CI}} \cdot N_{\text{CCE},p}}{L \cdot M_{s,\max}^{(L)}} \right\rfloor + n_{CI} \right) mod \left\lfloor N_{\text{CCE},p}/L \right\rfloor \right\} + i + off1 \quad (1)$$

L represents an aggregation level of a PDCCH. $Y_{p,n_{s,f}^{\mu}}$ represents a frequency domain offset position of a CCE in a PDCCH candidate, and for the CORESET 0, $Y_{p,n_{s,f}^{\mu}} = 0$. $N_{\text{CCE},p}$ represents a quantity of CCEs in a control resource set p. $m_{s,n_{CI}}$ represents a corresponding cross-carrier indication $n_{CI}$ and a quantity of PDCCH candidates in a search space when the aggregation level of the PDCCH is L. $M_{s,max}^{(L)}$ represents a maximum quantity of candidate sets in the search space s and at the aggregation level L, $n_{CI}$ represents the cross-carrier indication, and for the CORESET 0, $n_{CI} = 0$, where i is an index of a CCE at the aggregation level L. off1 represents an offset between the CCE index included in the Type 0-PDCCH within the first bandwidth and the CCE index included in the Type 0-PDCCH within the second bandwidth, where the offset is fixed. In this embodiment of this application, unless otherwise specified, the aggregation level of the PDCCH is 4.

off1 is related to a first parameter. The first parameter is an offset offset between an SSB obtained through frequency domain alignment and a frequency domain lower boundary of a control resource set corresponding to a CCE within the second bandwidth. The first parameter may be determined by the terminal device based on the configuration information that is of the CORESET 0 and that is received from the network device. The configuration information of the CORESET 0 is included in the SSB. The configuration information of the CORESET 0 includes: the quantity of time domain symbols of the CORESET 0, the quantity of RBs occupied by the CORESET 0 in frequency domain, and the offset offset between the CORESET 0 obtained through frequency domain alignment and the frequency domain lower boundary of the SSB, where the CORESET 0 is the control resource set corresponding to the CCE within the second bandwidth. As shown in Table 1, the first parameter may be the offset offset in Table 1. In an example, when the first parameter is 0 RBs, off1 is 1. When the first parameter is 2 RBs, off1 is 2. When the first parameter is 4 RBs, off1 is 2 RBs.

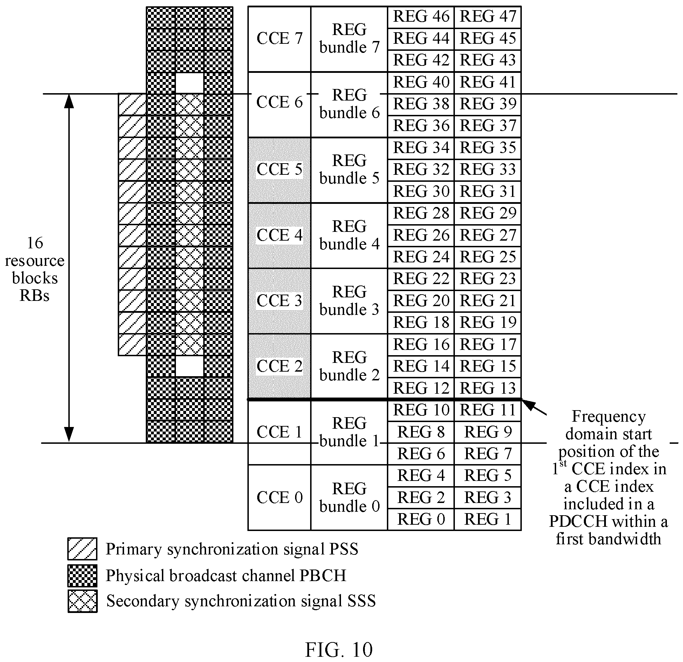

In an example, as shown in FIG. 10, it is assumed that the terminal device determines that the CCE-to-REG mapping relationship within the first bandwidth in the control resource set is the non-interleaved mapping relationship. The terminal device determines, based on the configuration information of the CORESET 0, that the first parameter is 4 RBs, and determines, based on a case that the first parameter is 4 RBs, that off1 is 2 RBs. Then, CCE indexes included in the Type 0-PDCCH whose aggregation level is 4 in the CORESET 0 within the first bandwidth are determined based on the foregoing calculation formula (1), where the CCE indexes are a CCE index 2, a CCE index 3, a CCE index 4, and a CCE index 5. Therefore, it is determined that the 1st CCE is a CCE whose index is 2, in other words, the frequency domain start position of the 1st CCE that is detected is determined. Correspondingly, the terminal device starts to detect the Type 0-PDCCH in the CORESET 0 at the CCE whose index is 2. The detected Type 0-PDCCH in the CORESET 0 includes the CCE index 2, the CCE index 3, the CCE index 4, and the CCE index 5.

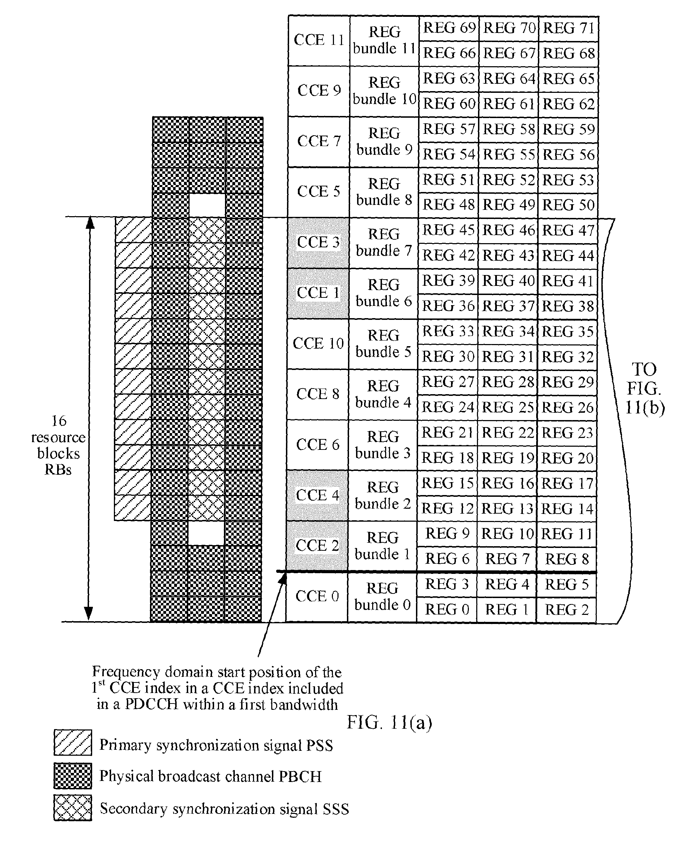

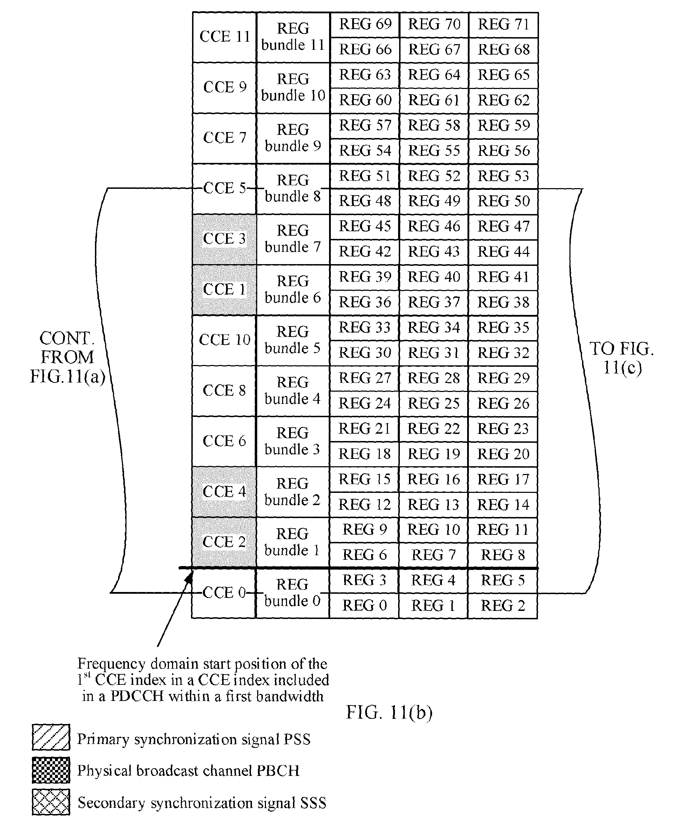

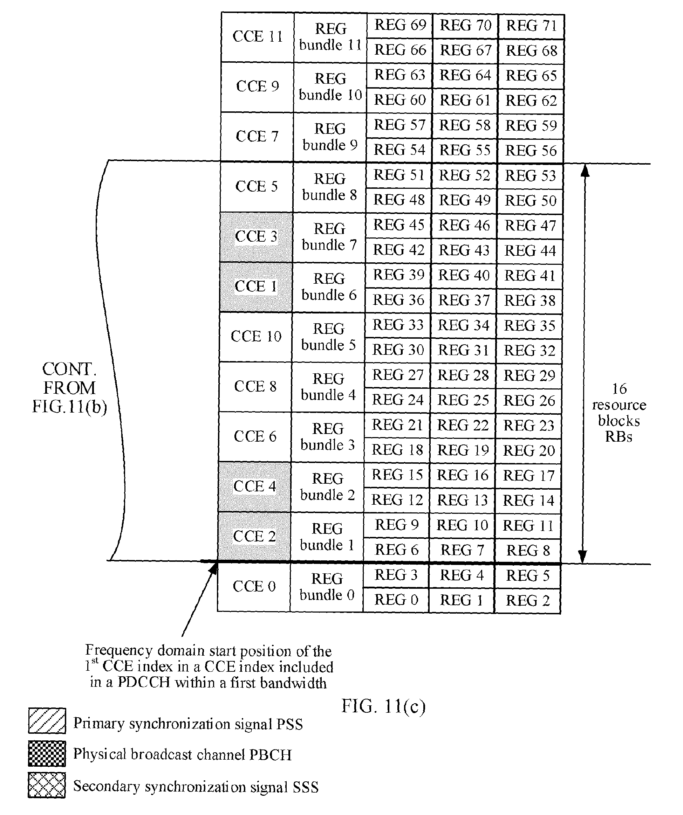

In an example, it is assumed that the terminal device determines that the CCE-to-REG mapping relationship within the first bandwidth in the control resource set is the interleaved mapping relationship. The terminal device determines, based on the configuration information of the CORESET 0, that the quantity of time domain symbols of the CORESET 0 is 3, the quantity of resource blocks occupied by the CORESET 0 in frequency domain is 24, and the first parameter is 0 RBs. The terminal device determines, based on a case that the first parameter is 0 RBs, that off1 is 1 RB, then determines, based on the foregoing calculation formula (1), the CCE index set included in the Type 0-PDCCH within the first bandwidth, and determines, based on the CCE index set included in the Type 0-PDCCH, the frequency domain start position of the 1st CCE that is detected. Details are as follows. When offset indication information $k_{ssb} = 0$, where the offset indication information indicates a quantity of subcarriers offset between a lowest frequency position of the SSB and a position of a resource block RB in frequency domain closest to the lowest frequency position of the SSB, the terminal device determines that the frequency domain start position of the 1st CCE index in the CCE index included in the Type 0-PDCCH within the first bandwidth is shown in FIG. 11(a). When the offset indication information $k_{ssb} = 12$, the terminal device determines that the frequency domain start position of the 1st CCE index in the CCE index included in the Type 0-PDCCH within the first bandwidth is shown in FIG. 11(b). When the offset indication information $k_{ssb} = 23$, the terminal device determines that the frequency domain start position of the 1st CCE index in the CCE index included in the Type 0-PDCCH within the first bandwidth is shown in FIG. 11(c). The terminal device determines that the frequency domain start position of the 1st CCE that is detected is the CCE whose index is 2. Correspondingly, the terminal device starts to detect the Type 0-PDCCH in the CORESET 0 at the CCE whose index is 2. The detected Type 0-PDCCH in the CORESET 0 includes a CCE index 1, a CCE index 2, a CCE index 3, and a CCE index 4.

Manner 2: The terminal device determines, in the control resource set, the CCE index included in the PDCCH within the first bandwidth, in other words, determines that a CCE corresponding to the 1st CCE index in the CCE index included in the Type 0-PDCCH in the CORESET 0 within the first bandwidth is the 1st complete CCE within the first bandwidth.

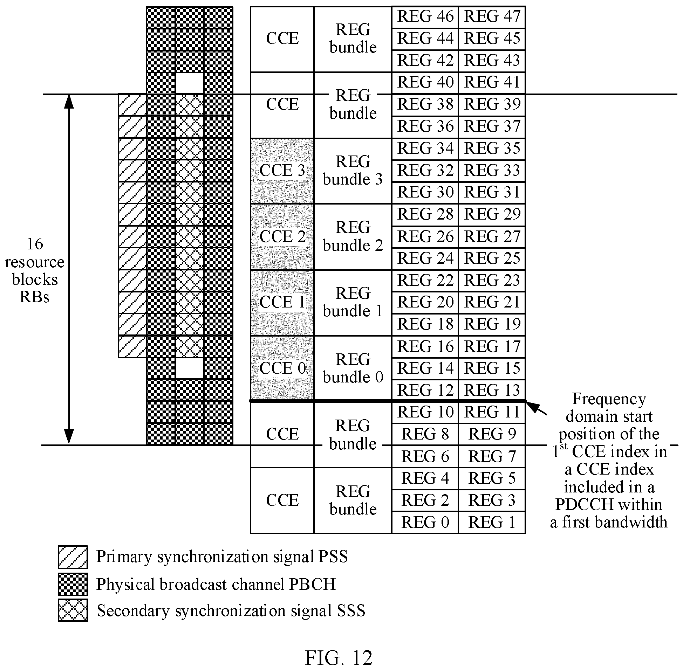

In an example, it is assumed that the terminal device determines that the CCE-to-REG mapping relationship within the first bandwidth in the control resource set is the non-interleaved mapping relationship. The quantity of RBs occupied by the CORESET 0 that is in frequency domain and that corresponds to the CCE within the first bandwidth is 24, the quantity of time domain symbols of the CORESET 0 corresponding to the PDCCH is 2, and the offset offset between the CORESET 0 that corresponds to the PDCCH and that is obtained through frequency domain alignment and the frequency domain lower boundary of the SSB is 0. As shown in FIG. 12, a CCE index set included in the Type 0-PDCCH whose aggregation level is 4 is determined, then, it is determined, based on the CCE index set included in the Type 0-PDCCH whose aggregation level is 4, that the 1st CCE is a CCE whose index is 0, where the CCE whose index is 0 is the 1st complete CCE within the first bandwidth, in other words, the frequency domain start position of the 1st CCE that is detected is determined. The terminal device starts to detect the Type 0-PDCCH in the CORESET 0 at the CCE whose index is 0, where the detected Type 0-PDCCH in the CORESET 0 includes a CCE index 0, a CCE index 1, a CCE index 2, and a CCE index 3.

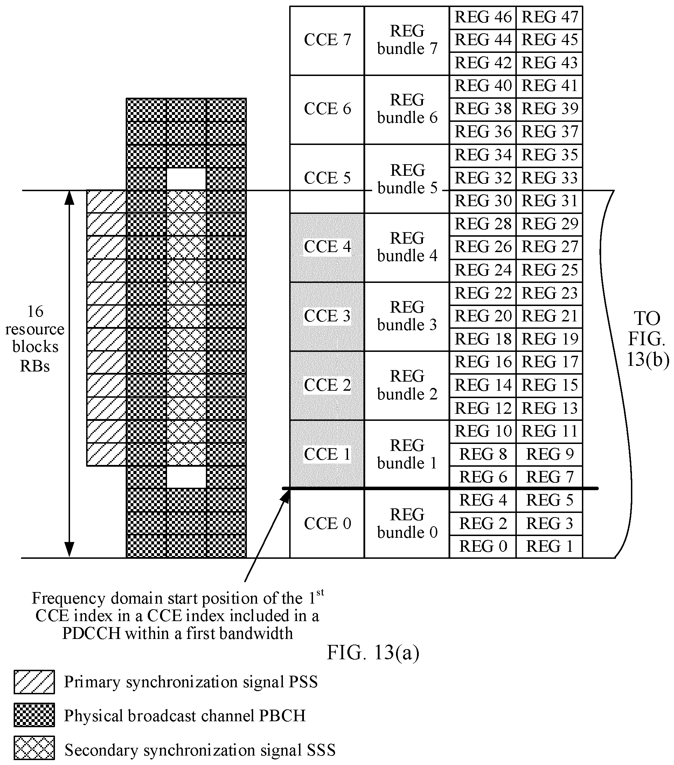

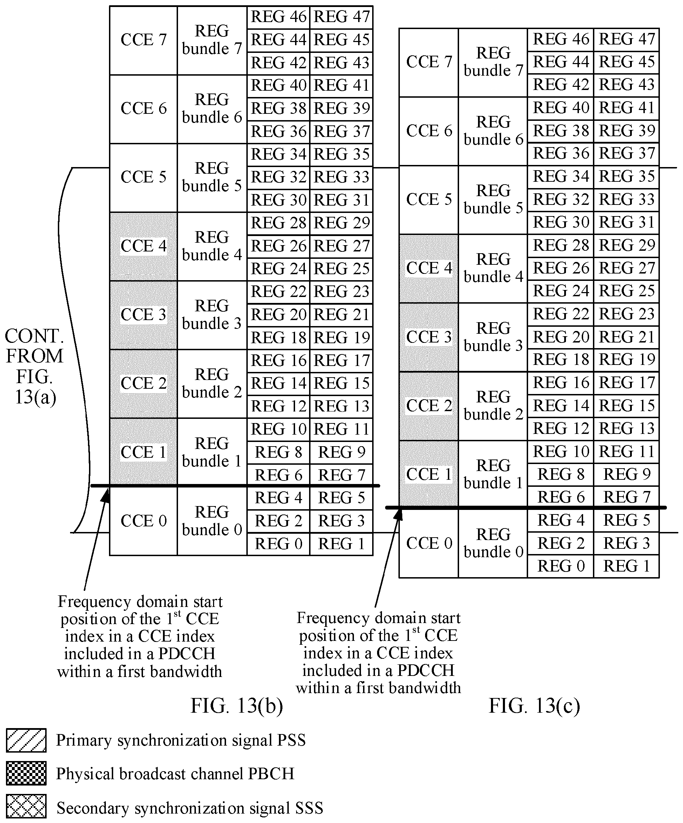

In an example, it is assumed that the terminal device determines that the CCE-to-REG mapping relationship within the first bandwidth in the control resource set is the non-interleaved mapping relationship. The quantity of RBs occupied by the CORESET 0 that is in frequency domain and that corresponds to the CCE within the first bandwidth is 24, the quantity of time domain symbols of the CORESET 0 corresponding to the PDCCH is 2, and the offset offset between the CORESET 0 that corresponds to the PDCCH and that is obtained through frequency domain alignment and the frequency domain lower boundary of the SSB is 0. Therefore, a CCE index set included in the Type 0-PDCCH whose aggregation level is 4 is determined. When offset indication information $k_{ssb} = 0$, where the offset indication information indicates a quantity of subcarriers offset between a lowest frequency position of the SSB and a lowest position of a lowest resource block RB in frequency domain. The frequency domain start position of the 1st CCE index in the CCE index included in the Type 0-PDCCH within the first bandwidth is shown in FIG. 13(a). When offset indication information $k_{ssb} = 12$, the frequency domain start position of the 1st CCE index in the CCE index included in the Type 0-PDCCH within the first bandwidth is shown in FIG. 13(b). When offset indication information $k_{ssb} = 23$, the frequency domain start position of the 1st CCE index in the CCE index included in the Type 0-PDCCH within the first bandwidth is shown in FIG. 13(c). That the 1st CCE is a CCE whose index is 1 is determined based on the CCE index set included in the Type 0-PDCCH whose aggregation level is 4, where the CCE whose index is 1 is the 1st complete CCE within the first bandwidth when a value of $k_{ssb}$ is different, in other words, the frequency domain start position of the 1st CCE that is detected is determined, and the terminal device starts to detect the Type 0-PDCCH in the CORESET 0 at the CCE whose index is 1. The detected Type 0-PDCCH in the CORESET 0 includes a CCE index 1, a CCE index 2, a CCE index 3, and a CCE index 4.

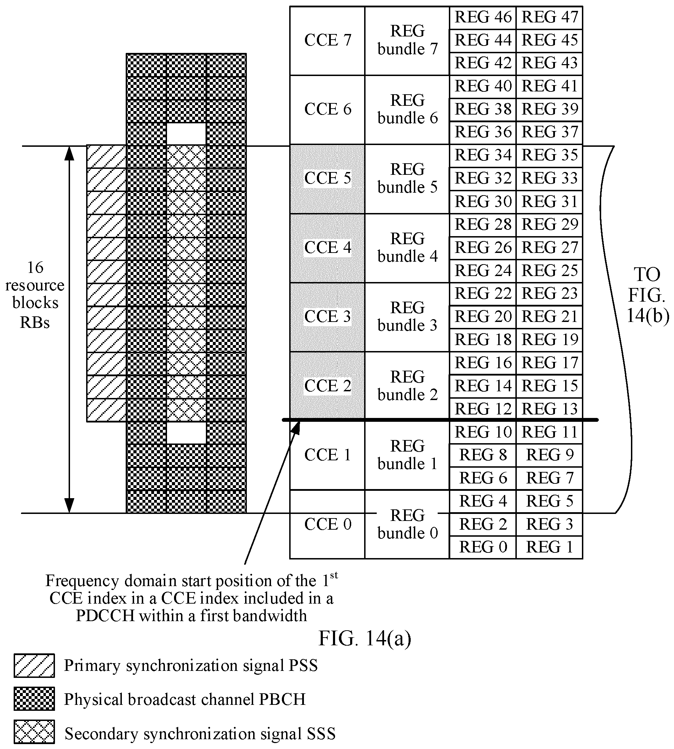

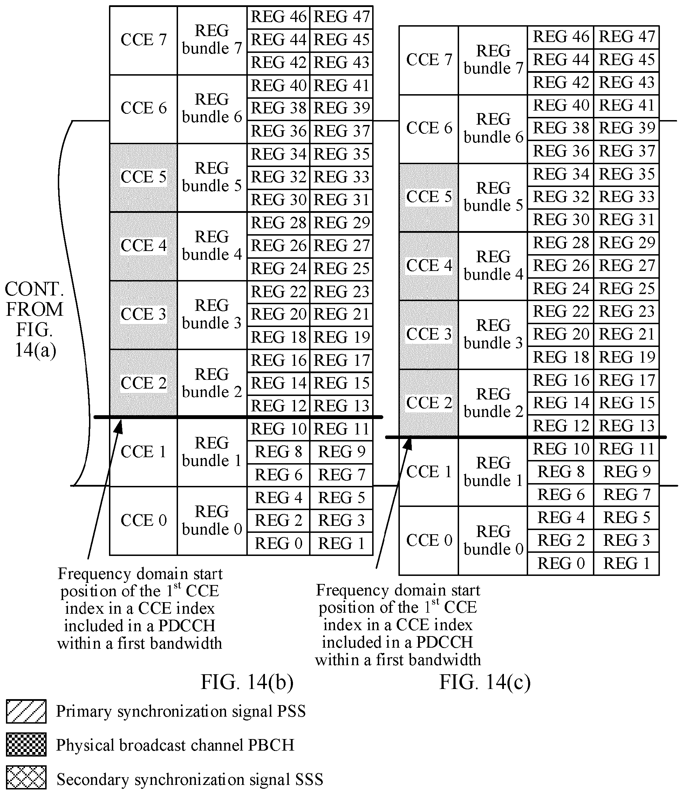

In an example, it is assumed that the terminal device determines that the CCE-to-REG mapping relationship in the CORESET 0 corresponding to the PDCCH within the first bandwidth is the non-interleaved mapping relationship. The quantity of RBs occupied by the CORESET 0 that is in frequency domain and that corresponds to the CCE within the first bandwidth is 24, the quantity of time domain symbols of the CORESET 0 corresponding to the PDCCH is 2, and the offset offset between the CORESET 0 that corresponds to the PDCCH and that is obtained through frequency domain alignment and the frequency domain lower boundary of the SSB is 2, to determine the CCE index set included in the Type 0-PDCCH whose aggregation level is 4. When offset indication information $k_{ssb} = 0$, where the offset indication information indicates a quantity of subcarriers offset between a lowest frequency position of the SSB and a lowest position of a lowest resource block RB in frequency domain, the frequency domain start position of the 1st CCE index in the CCE index included in the Type 0-PDCCH within the first bandwidth is shown in FIG. 14(a). When offset indication information $k_{ssb} = 12$, the frequency domain start position of the 1st CCE index in the CCE index included in the Type 0-PDCCH within the first bandwidth is shown in FIG. 14(b). When offset indication information $k_{ssb} = 23$, the frequency domain start position of the 1st CCE index in the CCE index included in the Type 0-PDCCH within the first bandwidth is shown in FIG. 14(c). That the 1st CCE is the CCE whose index is 2 is determined based on the CCE index set included in the Type 0-PDCCH whose aggregation level is 4, where the CCE whose index is 2 is the 1st complete CCE within the first bandwidth when a value of $k_{ssb}$ is different, in other words, the frequency domain start position of the 1st CCE within the first bandwidth is determined, and the terminal device starts to detect the Type 0-PDCCH in the CORESET 0 at the CCE whose index is 2. The detected Type 0-PDCCH in the CORESET 0 includes a CCE index 2, a CCE index 3, a CCE index 4, and a CCE index 5.

Step S805: The terminal device detects the PDCCH based on the CCE index included in the PDCCH within the first bandwidth in the control resource set.

Specifically, after determining the CCE index included in the Type 0-PDCCH in the CORESET 0 within the first bandwidth, the terminal device starts to detect the Type 0-PDCCH based on the aggregation level of 4.

In the method described in FIG. 8, in a manner of determining the frequency domain start position of the Type 0-PDCCH in the CORESET 0 within the first bandwidth, the complete Type 0-PDCCH in the CORESET 0 can be received on the first bandwidth, namely, a narrowband network, to improve transmission performance of the PDCCH without affecting reception of the SIB1.

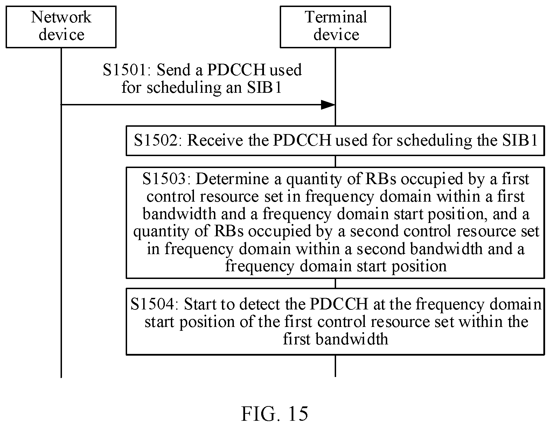

FIG. 15 shows a communication method according to an embodiment of this application. The method includes but not limited to the following steps.

Step S1501: A network device sends, to a terminal device, a PDCCH used for scheduling an SIB1.

For details, refer to step S801. Details are not described herein again.

Step S1502: The terminal device receives, from the network device, the PDCCH used for scheduling the SIB 1.

Step S1503: The terminal device determines a quantity of RBs occupied by a first control resource set in frequency domain within a first bandwidth and a frequency domain start position of the first control resource set, and a quantity of RBs occupied by a second control resource set in frequency domain within a second bandwidth and a frequency domain start position of the second control resource set.

Specifically, the first control resource set and the second control resource set are a CORESET 0 for transmitting a Type 0-PDCCH. The first control resource set includes detecting a PDCCH candidate used for scheduling the SIB1. A subcarrier spacing corresponding to the first control resource set is 15 kHz. A quantity of time domain symbols of the first control resource set is 3.

Specifically, the quantity of RBs occupied by the first control resource set in frequency domain is less than a minimum quantity of RBs of the second control resource set in frequency domain. The quantity of RBs occupied by the first control resource set in frequency domain is less than 24. The quantity of RBs occupied by the second control resource set in frequency domain is greater than 24 or equal to 24, in other words, the minimum quantity of RBs of the second control resource set in frequency domain is 24. In an example, the quantity of RBs occupied by the first control resource set in frequency domain is one of 12, 15, 16, 18, and 20. In an example, as shown in Table 1, the quantity $N_{\mathrm{RB}}^{\mathrm{CORESET}}$ of RBs occupied by the second control resource set in frequency domain is one of 24, 48, and 96.

Specifically, the first bandwidth is less than the second bandwidth, and the second bandwidth includes the first bandwidth. The first bandwidth is a narrow bandwidth, and the second bandwidth is a wide bandwidth. In an example, the first bandwidth is less than 5 MHz, for example, the first bandwidth is 3 MHz, and the second bandwidth is greater than 5 MHz. For example, the first bandwidth occupies 16 RBs at a subcarrier spacing of 15 kHz, and the second bandwidth occupies 24 RBs at a subcarrier spacing of 15 kHz.

Specifically, a first offset offset corresponding to the first control resource set is different from a second offset offset corresponding to the second control resource set. The first offset is an offset between an SSB obtained through frequency domain alignment and a frequency domain lower boundary of the first control resource set. The second offset is an offset between the SSB obtained through frequency domain alignment and a frequency domain lower boundary of the second control resource set. The first offset offset is less than or equal to 0. In an example, the first offset offset is one of -4 RBs, -3 RBs, -2 RBs, -1 RB, and 0 RBs. In an example, as shown in Table 1, the second offset offset may be an offset offset with a specific value of one of 0, 2, and 4.

Specifically, that the terminal device determines the frequency domain start position of the first control resource set within the first bandwidth may refer to that the terminal device determines a frequency domain start position of the 1st CCE index in a CCE index included in the PDCCH within the first bandwidth. That the terminal device determines the frequency domain start position of the second control resource set within the second bandwidth may refer to that the terminal device determines a frequency domain start position of the 1st CCE index in a CCE index included in the PDCCH within the second bandwidth.

Specifically, the terminal device may determine, based on configuration information received by the terminal device from the network device, the quantity of RBs occupied by the second control resource set in frequency domain within the second bandwidth. The configuration information includes: an SSB and second control resource set multiplexing pattern, a quantity of time domain symbols of the second control resource set, the quantity of RBs occupied by the second control resource set in frequency domain, and an offset offset between the second control resource set obtained through frequency domain alignment and a frequency domain lower boundary of the SSB. Details are shown in Table 1. It may be learned from Table 1 that the minimum quantity of RBs of the second control resource set in frequency domain within the second bandwidth is 24.

The terminal device may determine the frequency domain start position of the second control resource set within the second bandwidth based on a manner in which a CCE-to-REG mapping relationship within the second bandwidth is interleaved mapping, an interleaver whose R is equal to 2, configuration information that is of the second control resource set and that is shown in Table 1, and a calculation formula of the CCE index included in the PDCCH within the second bandwidth.

Specifically, the terminal device may determine, based on the configuration information received by the terminal device from the network device, the quantity of RBs occupied by the first control resource set in frequency domain within the first bandwidth. The configuration information includes: an SSB and first control resource set multiplexing pattern, a quantity of time domain symbols of the first control resource set, the quantity of RBs occupied by the first control resource set in frequency domain, and an offset offset between the first control resource set obtained through frequency domain alignment and the frequency domain lower boundary of the SSB, where the offset may be referred to as a first offset for short. Before or after the terminal device determines the quantity of RBs occupied by the first control resource set in frequency domain within the first bandwidth, the terminal device further needs to determine that the CCE-to-REG mapping relationship in the first control resource set is a non-interleaved mapping relationship or an interleaved mapping relationship. Specifically, the network device may send indication information to the terminal device, where the indication information indicates the CCE-to-REG mapping relationship in the first control resource set. Alternatively, indication information indicating the CCE-to-REG mapping relationship in the first control resource set may be included in the configuration information of the CORESET 0.

In an example, it is assumed that the CCE-to-REG mapping relationship in the first control resource set is the non-interleaved mapping relationship. The terminal device receives the configuration information from the network device. Details are shown in Table 3.

**Table 3**

| Index sequence number | SSB and first control resource set multiplexing pattern | Quantity $N_{\text{RB}}^{\text{CORESET}}$ of RBs occupied in frequency domain | Quantity $N_{\text{symb}}^{\text{CORESET}}$ of time domain symbols | First offset offset (RBs) |
|---|---|---|---|---|
| 0 | 1 | 12 | 2 | 0 |
| 1 | 1 | 12 | 2 | -1 |
| 2 | 1 | 12 | 2 | -2 |
| 3 | 1 | 12 | 2 | -3 |
| 4 | 1 | 12 | 2 | -4 |
| 5 | 1 | 12 | 3 | 0 |
| 6 | 1 | 12 | 3 | -1 |
| 7 | 1 | 12 | 3 | -2 |
| 8 | 1 | 12 | 3 | -3 |
| 9 | 1 | 12 | 3 | -4 |
| 10 | 1 | 16 | 3 | 0 |
| 11 | 1 | 16 | 3 | -1 |
| 12 | 1 | 16 | 3 | -2 |
| 13 | 1 | 16 | 3 | -3 |
| 12 | 1 | 16 | 3 | -4 |
| 13 | ... | ... | ... | ... |
| 14 | ... | ... | ... | ... |
| 15 | Reserved | | | |

It may be learned from Table 3 that the quantity of time domain symbols of the first control resource set may be 2 or 3. When the quantity of time domain symbols of the first control resource set is 2, the quantity $N_{\text{RB}}^{\text{CORESET}}$ of RBs occupied by the first control resource set in frequency domain may be 12, and the first offset may be one of 0, -1, -2, -3, or -4. When the quantity of time domain symbols of the first control resource set is 3, the quantity $N_{\text{RB}}^{\text{CORESET}}$ of RBs occupied by the first control resource set in frequency domain may be 12, and the first offset may be one of 0, -1, -2, -3, or -4. When the quantity of time domain symbols of the first control resource set is 3, the quantity $N_{\text{RB}}^{\text{CORESET}}$ of RBs occupied by the first control resource set in frequency domain may be 16, and the first offset may be one of 0, -1, -2, -3, or -4.

For example, the frequency domain start position of the first control resource set within the first bandwidth is determined based on the CCE-to-REG mapping relationship in the first control resource set within the first bandwidth, the quantity of time domain symbols of the first control resource set, the quantity of RBs occupied by the first control resource set in frequency domain, and the first offset offset.

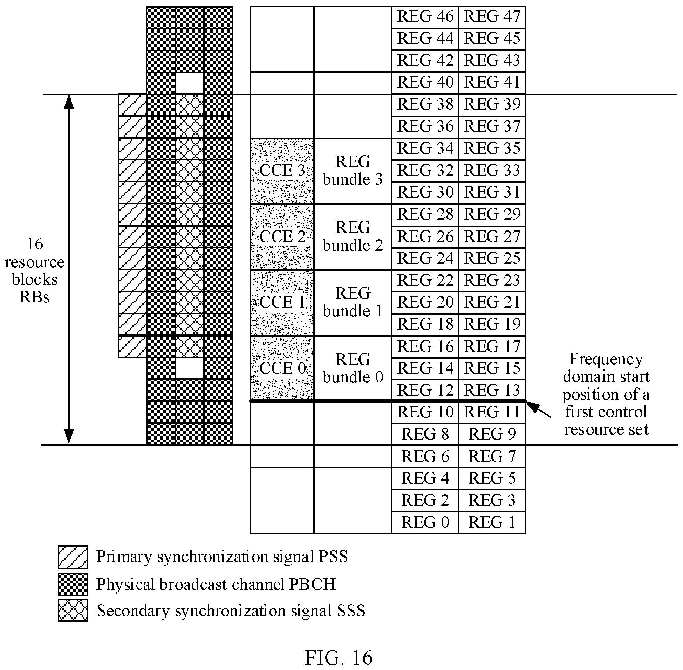

In an example, it is assumed that the terminal device determines that the CCE-to-REG mapping relationship in the first control resource set within the first bandwidth is the non-interleaved mapping relationship. The configuration information of the first control resource set includes that the quantity of time domain symbols of the first control resource set is 2, the quantity $N_{\text{RB}}^{\text{CORESET}}$ of RBs occupied by the first control resource set in frequency domain is 12, and the first offset offset is -2. The terminal device determines the frequency domain start position of the first control resource set within the first bandwidth based on the quantity of RBs occupied by the first control resource set in frequency domain and the first offset offset. Details are shown in FIG. 16. Correspondingly, the terminal device starts to detect the Type 0-PDCCH in the CORESET 0 at the frequency domain start position of the first control resource set, and the detected Type 0-PDCCH in the CORESET 0 includes a CCE index 0, a CCE index 1, a CCE index 2, and a CCE index 3.

In an example, it is assumed that the CCE-to-REG mapping relationship in the first control resource set is the interleaved mapping relationship. The terminal device receives the configuration information from the network device. Details are shown in Table 4.

**Table 4**

| Index sequence number | SSB and first control resource set multiplexing pattern | Quantity $N_{RB}^{CORESET}$ of RBs occupied in frequency domain | Quantity $N_{symb}^{CORESET}$ of time symb domain symbols | First offset offset (RBs) |
|---|---|---|---|---|
| 0 | 1 | 16 | 3 | 0 |
| 1 | 1 | 16 | 3 | -1 |
| 2 | 1 | 16 | 3 | -2 |
| 3 | 1 | 16 | 3 | -3 |
| 4 | 1 | 20 | 3 | 0 |
| 5 | 1 | 20 | 3 | -1 |
| 6 | 1 | 20 | 3 | -2 |
| 7 | 1 | 20 | 3 | -3 |
| 8 | ... | ... | ... | ... |
| 9 | ... | ... | ... | ... |
| 10 | ... | ... | ... | ... |
| 11 | ... | ... | ... | ... |
| 12 | ... | ... | ... | ... |
| 13 | ... | ... | ... | ... |
| 14 | ... | ... | ... | ... |
| 15 | Reserved | | | |

It can be learned from Table 4 that when the CCE-to-REG mapping relationship in the first control resource set within the first bandwidth is the interleaved mapping relationship, the quantity of time domain symbols of the first control resource set may be 3, and the quantity $N_{RB}^{CORESET}$ of RBs occupied by the first control resource set in frequency domain may be 16 or 20. When the quantity $N_{RB}^{CORESET}$ of RBs occupied by the first control resource set in frequency domain is 16, the quantity of time domain symbols of the first control resource set may be 3, and the first offset offset may be one of 0, -1, -2, and -3. When the quantity $N_{RB}^{CORESET}$ of RBs occupied by the first control resource set in frequency domain is 20, the quantity of time domain symbols of the first control resource set may be 3, and the first offset offset may be one of 0, -1, - 2, and -3.

When the terminal device determines that the quantity $N_{RB}^{CORESET}$ of RBs occupied by the first control resource set in frequency domain is 16, the terminal device determines that a row quantity R of the interleaver is equal to 2, and a column quantity C of the interleaver is equal to 4. When the terminal device determines that the quantity $N_{RB}^{CORESET}$ of RBs occupied by the first control resource set in frequency domain is 20, the terminal device determines that the row quantity R of the interleaver is equal to 2 and the column quantity C of the interleaver is equal to 5. Specifically, the terminal device may determine the row quantity and the column quantity that are of the interleaver in the following manners: Manner 1: The terminal device receives indication information from the network device, where the indication information indicates the row quantity and the column quantity that are of the interleaver. Manner 2: The terminal device receives configuration information from the network device, where the configuration information includes the row quantity and the column quantity that are of the interleaver. Manner 3: When the terminal device determines that the quantity $N_{RB}^{CORESET}$ of RBs occupied by the first control resource set in frequency domain is 16, it is configured by default that the row quantity R of the interleaver is equal to 2 and the column quantity C of the interleaver is equal to 4. When the terminal device determines that the quantity $N_{RB}^{CORESET}$ of RBs occupied by the first control resource set in frequency domain is 20, it is configured by default that the row quantity R of the interleaver is equal to 2 and the column quantity C of the interleaver is equal to 5.

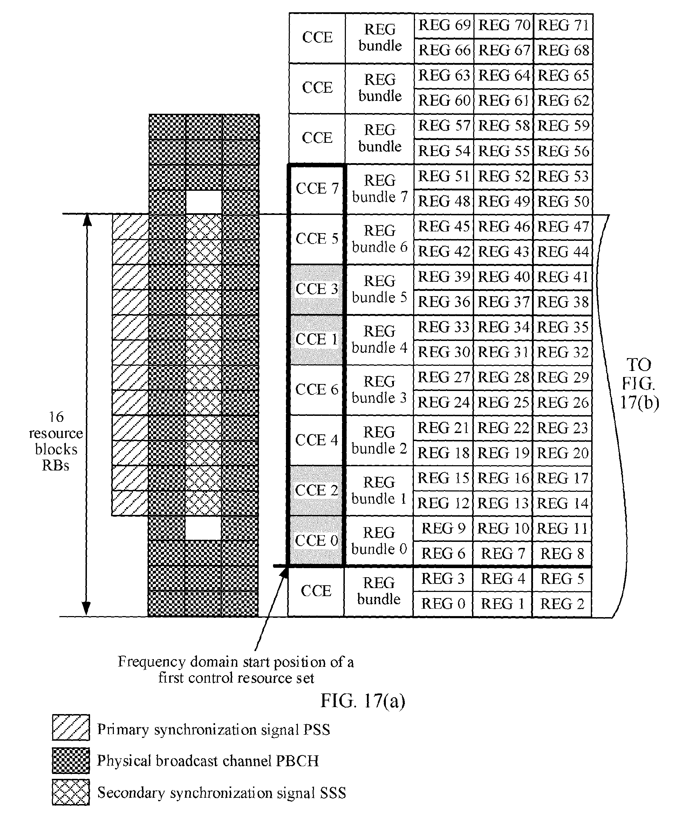

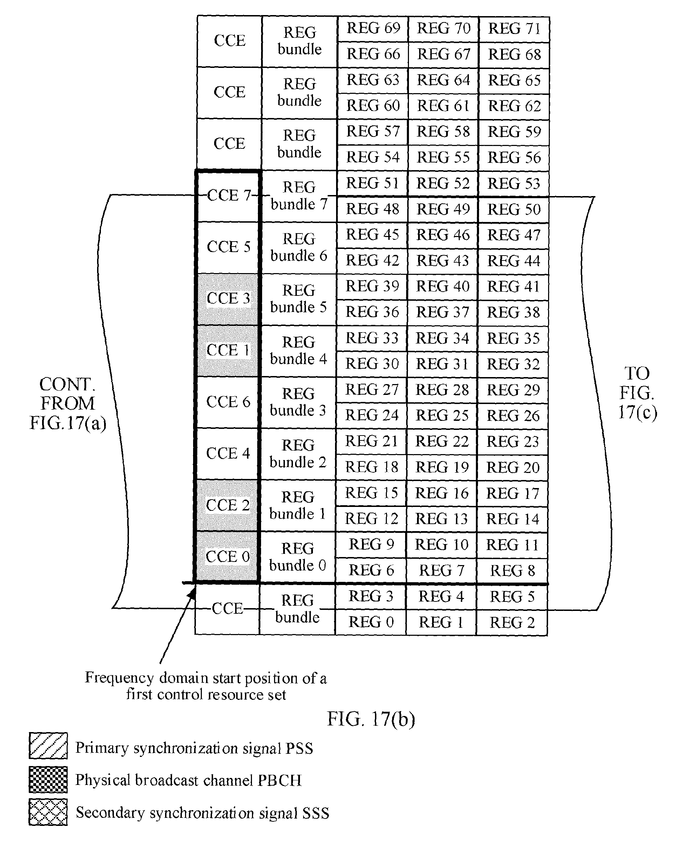

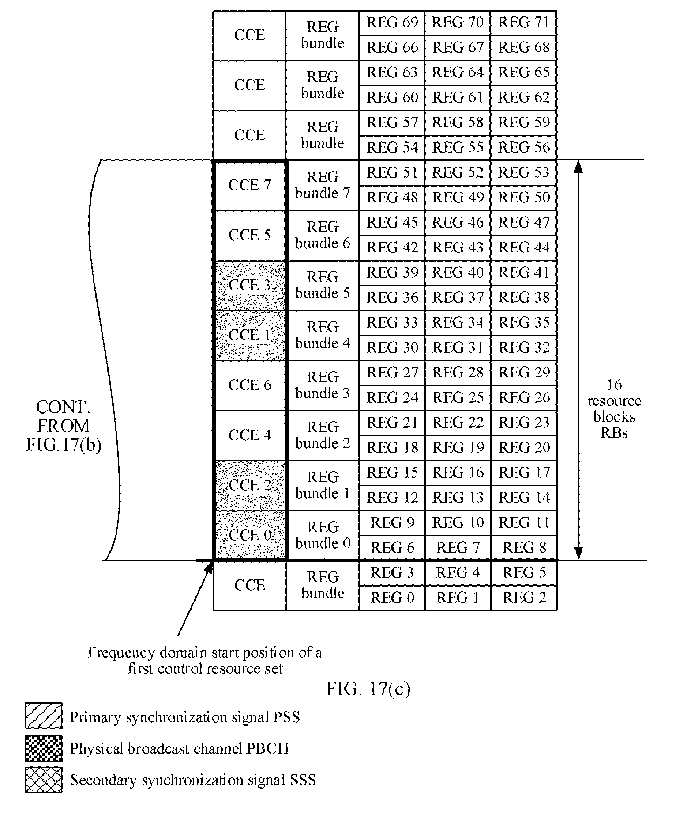

In an example, it is assumed that the terminal device determines that the CCE-to-REG mapping relationship in the first control resource set is the interleaving mapping relationship. The terminal device receives the configuration information from the network device, where the configuration information includes that the quantity of time domain symbols of the first control resource set is 3, the quantity $N_{RB}^{CORESET}$ of RBs occupied by the first control resource set in frequency domain is 16, and the first offset offset is 0. The terminal device receives the indication information from the network device, determines, based on the indication information, that the row quantity R of the interleaver is equal to 2, and the column quantity C of the interleaver is equal to 4, and determines the frequency domain start position of the first control resource set based on the foregoing information. When offset indication information $k_{ssb}$ = 0, the offset indication information indicates a quantity of subcarriers offset between a lowest frequency position of the SSB and a lowest position of a lowest resource block RB in frequency domain. The terminal device determines that the frequency domain start position of the first control resource set within the first bandwidth is shown in FIG. 17(a). When the offset indication information $k_{ssb}$ = 12, the terminal device determines that the frequency domain start position of the first control resource set within the first bandwidth is shown in FIG. 17(b). When the offset indication information $k_{ssb}$ = 23, the terminal device determines that the frequency domain start position of the first control resource set within the first bandwidth is shown in FIG. 17(c). Correspondingly, the terminal device starts to detect the Type 0-PDCCH in the CORESET 0 at the frequency domain start position of the first control resource set, and the detected Type 0-PDCCH in the CORESET 0 includes a CCE index 0, a CCE index 1, a CCE index 2, and a CCE index 3.

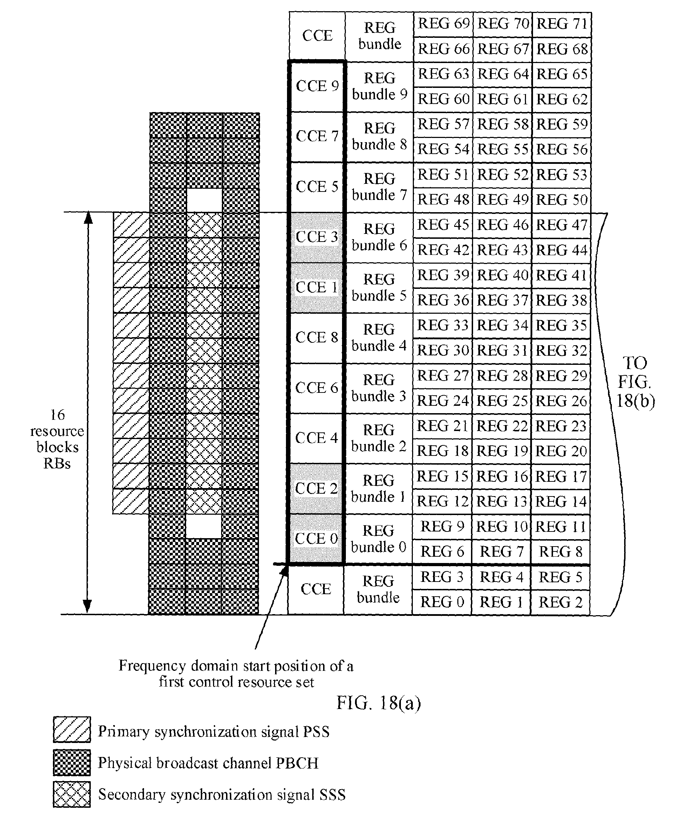

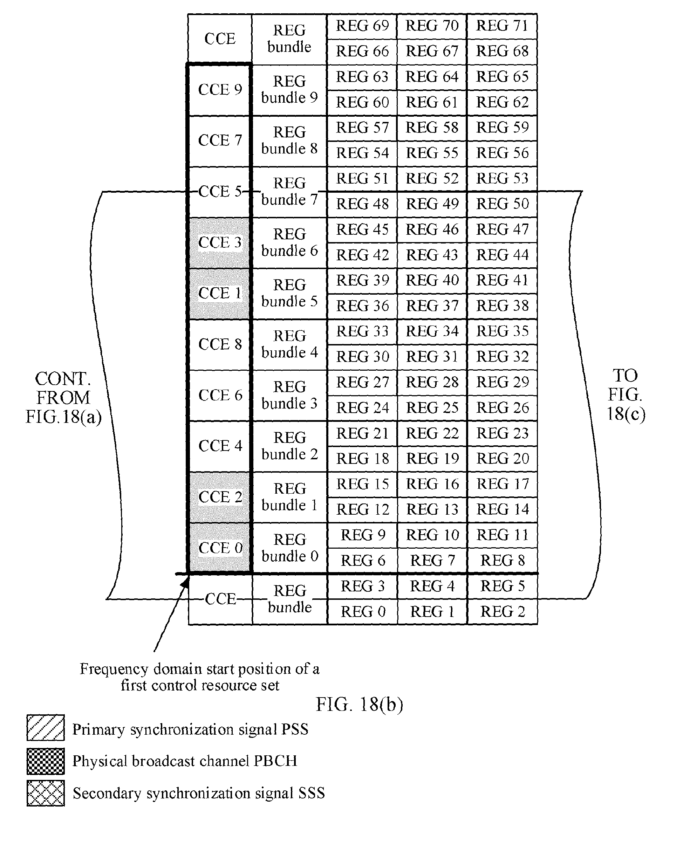

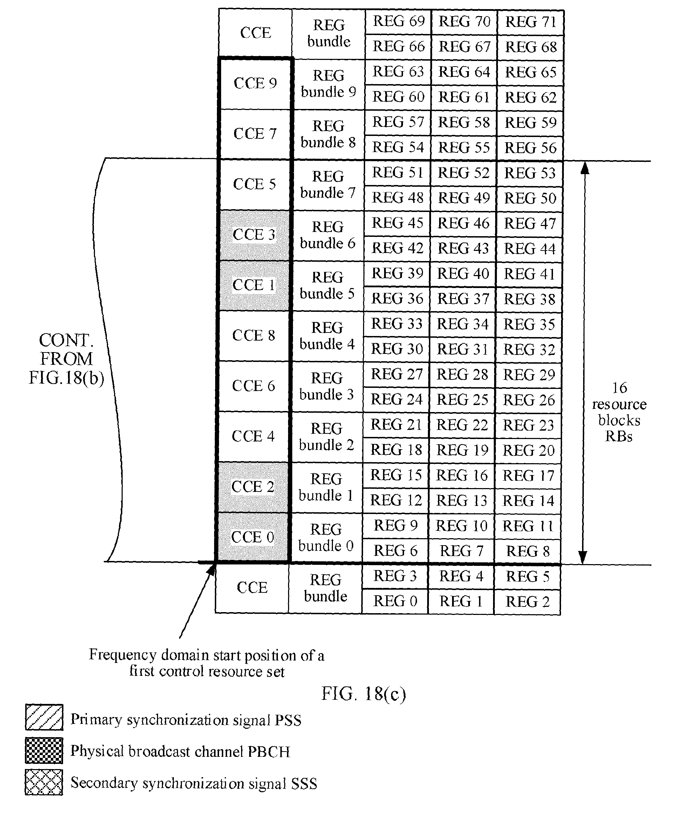

In an example, it is assumed that the terminal device determines that the CCE-to-REG mapping relationship in the first control resource set is the interleaving mapping relationship. The terminal device receives the configuration information from the network device, where the configuration information includes that the quantity of time domain symbols in the first control resource set is 3, the quantity $N_{RB}^{CORESET}$ of RBs occupied by the first control resource set in frequency domain is 20, and the first offset offset is 0. The terminal device receives the indication information from the network device, and determines, based on the indication information, that the row quantity R of the interleaver is equal to 2, and the column quantity C of the interleaver is equal to 5. Then, the terminal device determines the frequency domain start position of the first control resource set within the first bandwidth based on the foregoing information. For example, when the offset indication information $k_{ssb}$ = 0, the terminal device determines that the frequency domain start position of the first control resource set within the first bandwidth is shown in FIG. 18(a). When the offset indication information $k_{ssb}$ = 12, the terminal device determines that the frequency domain start position of the first control resource set within the first bandwidth is shown in FIG. 18(b). When the offset indication information $k_{ssb}$ = 23, the terminal device determines that the frequency domain start position of the first control resource set within the first bandwidth is shown in FIG. 18(c). Correspondingly, the terminal device starts to detect the Type 0-PDCCH in the CORESET 0 at the frequency domain start position of the first control resource set, and the detected Type 0-PDCCH in the CORESET 0 includes a CCE index 0, a CCE index 1, a CCE index 2, and a CCE index 3.

Step S1504: The terminal device starts to detect the PDCCH at the frequency domain start position of the first control resource set within the first bandwidth.

Specifically, the frequency domain start position of the first control resource set within the first bandwidth is a frequency domain start position of the 1st CCE index in a CCE index included in the Type 0-PDCCH in the first control resource set (CORESET 0). In other words, after the CCE index included in the Type 0-PDCCH in the first control resource set (CORESET 0) is determined, the Type 0-PDCCH starts to be detected based on an aggregation level of 4.

In the method described in FIG. 15, in a manner of defining the quantity of resource blocks RBs occupied by the first control resource set in frequency domain, a complete Type 0-PDCCH in the CORESET 0 can be received on the first bandwidth, namely, a narrowband network, to improve transmission performance of the PDCCH without affecting reception of the SIB1.

The method in embodiments of this application is described in detail above. The following provides an apparatus in embodiments of this application.

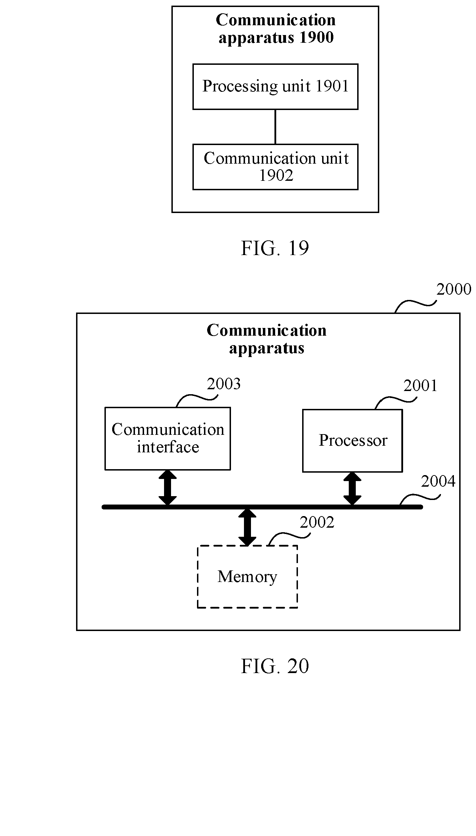

FIG. 19 is a schematic diagram of a structure of a communication apparatus 1900 according to an embodiment of this application. The communication apparatus 1900 may include a processing unit 1901 and a communication unit 1902. Detailed descriptions of the units are as follows.

The processing unit 1901 is configured to determine a frequency domain start position of a control resource set. The control resource set includes detecting a physical downlink control channel PDCCH candidate used for scheduling a system information block 1 (SIB1). The PDCCH is a PDCCH sent by a network device to schedule the SIB1.

The processing unit 1901 is configured to determine, in the control resource set, a control channel element CCE index included in a PDCCH within a first bandwidth and a CCE included in a PDCCH within a second bandwidth. An offset exists between the CCE index within the first bandwidth and the CCE index within the second bandwidth.

The processing unit 1901 is configured to detect the PDCCH based on the CCE index included in the PDCCH within the first bandwidth in the control resource set.

In a possible implementation, the 1st CCE index in the CCE index within the second bandwidth is a CCE index 0, and a frequency domain start position of the CCE index 0 is the frequency domain start position of the control resource set.

In another possible implementation, the first bandwidth is less than the second bandwidth, and the second bandwidth includes the first bandwidth.

In another possible implementation, the processing unit 1901 is configured to determine that a CCE-to-resource element group REG mapping relationship within the first bandwidth in the control resource set is a non-interleaved mapping relationship.

In another possible implementation, the communication unit 1902 is configured to receive first indication information from the network device. The first indication information indicates that the CCE-to-REG mapping relationship within the first bandwidth in the control resource set is the non-interleaved mapping relationship.

In another possible implementation, the offset between the CCE index within the first bandwidth and the CCE index within the second bandwidth is related to a first parameter. The first parameter is an offset offset between a synchronization signal block SSB obtained through frequency domain alignment and a frequency domain lower boundary of a control resource set corresponding to a CCE within the second bandwidth.

In another possible implementation, a quantity of time domain symbols of the control resource set is 2.

In another possible implementation, the processing unit 1901 is configured to determine that a CCE-to-REG mapping relationship within the first bandwidth in the control resource set is an interleaved mapping relationship.

In another possible implementation, the communication unit 1902 is configured to receive second indication information from the network device. The second indication information indicates that the CCE-to-REG mapping relationship within the first bandwidth in the control resource set is the interleaved mapping relationship.

It should be noted that, for implementation and beneficial effects of the units, refer to corresponding descriptions of the method embodiment shown in FIG. 8.

FIG. 19 is a schematic diagram of a structure of a communication apparatus 1900 according to an embodiment of this application. The communication apparatus 1900 may include a processing unit 1901 and a communication unit 1902. Detailed descriptions of the units are as follows.

The processing unit 1901 is configured to determine a quantity of resource blocks RBs occupied by a first control resource set in frequency domain within a first bandwidth and a frequency domain start position of the first control resource set, and a quantity of RBs occupied by a second control resource set in frequency domain within a second bandwidth and a frequency domain start position of the second control resource set. The first control resource set includes a physical downlink control channel PDCCH candidate used for scheduling a system information block 1 (SIB1). The PDCCH is a PDCCH sent by a network device to schedule the SIB1. The quantity of RBs of the first control resource set in frequency domain is less than a minimum quantity of RBs of the second control resource set in frequency domain;

The processing unit 1901 is configured to start to detect the PDCCH at the frequency domain start position of the first control resource set.

In a possible implementation, the first bandwidth is less than the second bandwidth, and the second bandwidth includes the first bandwidth.

In another possible implementation, the quantity of RBs occupied by the first control resource set in frequency domain is less than 24.

In another possible implementation, the quantity of RBs occupied by the first control resource set in frequency domain is one of 12, 15, 16, 18, and 20.

In another possible implementation, a subcarrier spacing corresponding to the first control resource set is 15 kilohertz kHz.

In another possible implementation, a first offset offset corresponding to the first control resource set is different from a second offset offset corresponding to the second control resource set. The first offset is an offset between an SSB obtained through frequency domain alignment and a lower boundary of the first control resource set. The second offset is an offset between the SSB obtained through frequency domain alignment and a lower boundary of the second control resource set.

In another possible implementation, the first offset offset is less than 0.

In another possible implementation, the first offset offset is one of -4 RBs, -3 RBs, -2 RBs, -1 RB, and 0 RBs.

In another possible implementation, a quantity of time domain symbols of the first control resource set is 3.

It should be noted that, for implementation and beneficial effects of the units, refer to corresponding descriptions of the method embodiment shown in FIG. 15.

FIG. 20 shows a communication apparatus 2000 according to an embodiment of this application. The apparatus 2000 includes at least one processor 2001 and a communication interface 2003, and optionally further includes a memory 2002. The processor 2001, the memory 2002, and the communication interface 2003 are connected to each other through a bus 2004.

The memory 2002 includes, but is not limited to, a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 2002 is configured to store a related computer program and data. The communication interface 2003 is configured to receive and send data.

The processor 2001 may be one or more central processing units (central processing units, CPUs). When the processor 2001 is one CPU, the CPU may be a single-core CPU, or may be a multi-core CPU.

The processor 2001 in the apparatus 2000 is configured to read computer program code stored in the memory 2002, to perform the following operations:

determining a frequency domain start position of a control resource set, where the control resource set includes detecting a physical downlink control channel PDCCH candidate used for scheduling a system information block 1 (SIB1), and the PDCCH is a PDCCH sent by a network device to schedule the SIB1;

determining, in the control resource set, a control channel element CCE index included in a PDCCH within a first bandwidth and a CCE index included in a PDCCH within a second bandwidth, where an offset exists between the CCE index within the first bandwidth and the CCE index within the second bandwidth; and

detecting the PDCCH based on the CCE index included in the PDCCH within the first bandwidth in the control resource set.

In a possible implementation, the 1st CCE index in the CCE index within the second bandwidth is a CCE index 0, and a frequency domain start position of the CCE index 0 is the frequency domain start position of the control resource set.

In another possible implementation, the first bandwidth is less than the second bandwidth, and the second bandwidth includes the first bandwidth.

In another possible implementation, the processor 2001 is configured to determine that a CCE-to-resource element group REG mapping relationship within the first bandwidth in the control resource set is a non-interleaved mapping relationship.

In another possible implementation, the processor 2001 is configured to receive first indication information from the network device through the communication interface 2003. The first indication information indicates that the CCE-to-REG mapping relationship within the first bandwidth in the control resource set is the non-interleaved mapping relationship.

In another possible implementation, the offset between the CCE index within the first bandwidth and the CCE index within the second bandwidth is related to a first parameter. The first parameter is an offset offset between a synchronization signal block SSB obtained through frequency domain alignment and a frequency domain lower boundary of a control resource set corresponding to a CCE within the second bandwidth.

In another possible implementation, a quantity of time domain symbols of the control resource set is 2.

In another possible implementation, the processor 2001 is configured to determine that a CCE-to-REG mapping relationship within the first bandwidth in the control resource set is an interleaved mapping relationship.

In another possible implementation, the processor 2001 is configured to receive second indication information from the network device through the communication interface 2003. The second indication information indicates that the CCE-to-REG mapping relationship within the first bandwidth in the control resource set is the interleaved mapping relationship.

It should be noted that, for implementation and beneficial effects of the operations, refer to corresponding descriptions of the method embodiment shown in FIG. 8.

FIG. 20 shows a communication apparatus 2000 according to an embodiment of this application. The apparatus 2000 includes at least one processor 2001 and a communication interface 2003, and optionally further includes a memory 2002. The processor 2001, the memory 2002, and the communication interface 2003 are connected to each other through a bus 2004.

The memory 2002 includes, but is not limited to, a random access memory (random access memory, RAM), a read-only memory (read-only memory, ROM), an erasable programmable read-only memory (erasable programmable read-only memory, EPROM), or a compact disc read-only memory (compact disc read-only memory, CD-ROM). The memory 2002 is configured to store a related computer program and data. The communication interface 2003 is configured to receive and send data.

The processor 2001 may be one or more central processing units (central processing units, CPUs). When the processor 2001 is one CPU, the CPU may be a single-core CPU, or may be a multi-core CPU.

The processor 2001 in the apparatus 2000 is configured to read computer program code stored in the memory 2002, to perform the following operations:

determining a quantity of resource blocks RBs occupied by a first control resource set in frequency domain within a first bandwidth and a frequency domain start position of the first control resource set, and a quantity of RBs occupied by a second control resource set in frequency domain within a second bandwidth and a frequency domain start position of the second control resource set, where the first control resource set includes detecting a physical downlink control channel PDCCH candidate used for scheduling a system information block 1 (SIB1), and the PDCCH is a PDCCH sent by a network device to schedule the SIB1, where the quantity of RBs of the first control resource set in frequency domain is less than a minimum quantity of RBs of the second control resource set in frequency domain; and

starting to detect the PDCCH at the frequency domain start position of the first control resource set.

In a possible implementation, the first bandwidth is less than the second bandwidth, and the second bandwidth includes the first bandwidth.

In another possible implementation, the quantity of RBs occupied by the first control resource set in frequency domain is less than 24.

In another possible implementation, the quantity of RBs occupied by the first control resource set in frequency domain is one of 12, 15, 16, 18, and 20.

In another possible implementation, a subcarrier spacing corresponding to the first control resource set is 15 kilohertz kHz.

In another possible implementation, a first offset offset corresponding to the first control resource set is different from a second offset offset corresponding to the second control resource set. The first offset is an offset between an SSB obtained through frequency domain alignment and a lower boundary of the first control resource set. The second offset is an offset between the SSB obtained through frequency domain alignment and a lower boundary of the second control resource set.

In another possible implementation, the first offset offset is less than 0.

In another possible implementation, the first offset offset is one of -4 RBs, -3 RBs, -2 RBs, -1 RB, and 0 RBs.

In another possible implementation, a quantity of time domain symbols of the first control resource set is 3.

It should be noted that, for implementation and beneficial effects of the operations, refer to corresponding descriptions of the method embodiment shown in FIG. 15.

It can be understood that the processor in embodiments of this application may be a central processing unit (Central Processing Unit, CPU), or may be another general-purpose processor, a digital signal processor (Digital Signal Processor, DSP), an application-specific integrated circuit (Application-Specific Integrated Circuit, ASIC), a field programmable gate array (Field Programmable Gate Array, FPGA) or another programmable logic device, a transistor logic device, a hardware component, or any combination thereof. The general-purpose processor may be a microprocessor, or may be any regular processor.

The steps in the method in embodiments of this application may be implemented in a hardware manner, or may be implemented in a manner of executing software instructions by the processor. The software instructions may include a corresponding software module. The software module may be stored in a random access memory, a flash memory, a read-only memory, a programmable read-only memory, an erasable programmable read-only memory, an electrically erasable programmable read-only memory, a register, a hard disk drive, a removable hard disk drive, a CD-ROM, or any other form of storage medium well-known in the art. For example, a storage medium is coupled to the processor, so that the processor can read information from the storage medium and write information into the storage medium. Certainly, the storage medium may be a component of the processor. The processor and the storage medium may be disposed in an ASIC. In addition, the ASIC may be located in a base station or a terminal. Certainly, the processor and the storage medium may exist in a base station or terminal as discrete components.

A part or all of the foregoing embodiments may be implemented by using software, hardware, firmware, or any combination thereof. When the software is used for implementation, the part or all of embodiments may be implemented in a form of a computer program product. The computer program product includes one or more computer programs or instructions. When the computer programs or instructions are loaded and executed on a computer, the procedures or functions in embodiments of this application are all or partially executed. The computer may be a general-purpose computer, a dedicated computer, a computer network, a network device, user equipment, or another programmable apparatus. The computer programs or instructions may be stored in a computer-readable storage medium, or may be transmitted from one computer-readable storage medium to another computer-readable storage medium. For example, the computer programs or instructions may be transmitted from a website, a computer, a server, or a data center to another website, computer, server, or data center in a wired or wireless manner. The computer-readable storage medium may be any usable medium that can be accessed by a computer, or a data storage device, such as a server or a data center, integrating one or more usable media. The usable media may be a magnetic medium, such as a floppy disk, a hard disk drive, or a magnetic tape, or may be an optical medium, for example, a digital video disc, or may be a semiconductor medium, for example, a solid-state disk. The computer-readable storage medium may be a volatile or non-volatile storage medium, or may include two types of storage media: a volatile storage medium and a non-volatile storage medium.

In various embodiments of this application, unless otherwise stated or there is a logic conflict, terms and/or descriptions in different embodiments are consistent and may be mutually referenced, and technical features in different embodiments may be combined based on an internal logical relationship thereof, to form a new embodiment.

It may be understood that various numbers in embodiments of this application are merely used for differentiation for ease of description, and are not intended to limit the scope of embodiments of this application. The sequence numbers of the foregoing processes do not mean execution sequences, and the execution sequences of the processes should be determined based on functions and internal logic that are of the processes.

**Claims**

1.  A communication method, comprising:

    determining, by a terminal device, a frequency domain start position of a control resource set, wherein the control resource set is used for detecting a physical downlink control channel PDCCH used for scheduling a system information block 1 (SIB1), and the PDCCH is a PDCCH sent by a network device to schedule the SIB1; determining, by the terminal device in the control resource set, a control channel element CCE index comprised in a PDCCH within a first bandwidth and a CCE index comprised in a PDCCH within a second bandwidth, wherein an offset exists between the CCE index within the first bandwidth and the CCE index within the second bandwidth; and detecting, by the terminal device, the PDCCH based on the CCE index comprised in the PDCCH within the first bandwidth in the control resource set.

2.  The method according to claim 1, wherein the $1^{st}$ CCE index in the CCE index within the second bandwidth is a CCE index 0, and a frequency domain start position of the CCE index 0 is the frequency domain start position of the control resource set.

3.  The method according to claim 1 or 2, wherein the first bandwidth is less than the second bandwidth, and the second bandwidth comprises the first bandwidth.

4.  The method according to any one of claims 1 to 3, wherein the method further comprises: determining, by the terminal device, that a CCE-to-resource element group REG mapping relationship within the first bandwidth in the control resource set is a non-interleaved mapping relationship.

5.  The method according to claim 4, wherein the determining, by the terminal device, that a CCE-to-resource element group REG mapping relationship within the first bandwidth in the control resource set is a non-interleaved mapping relationship comprises: receiving, by the terminal device, first indication information from the network device, wherein the first indication information indicates that the CCE-to-REG mapping relationship within the first bandwidth in the control resource set is the non-interleaved mapping relationship.

6.  The method according to any one of claims 1 to 3, wherein the offset between the CCE index within the first bandwidth and the CCE index within the second bandwidth is related to a first parameter, and the first parameter is an offset between a synchronization signal block SSB obtained through frequency domain alignment and a frequency domain lower boundary of a control resource set corresponding to a CCE within the second bandwidth.

7. The method according to any one of claims 4 to 6, wherein a quantity of time domain symbols of the control resource set is 2.

8. The method according to any one of claims 1 to 3, wherein the method further comprises:
determining, by the terminal device, that a CCE-to-REG mapping relationship within the first bandwidth in the control resource set is an interleaved mapping relationship.

9. The method according to claim 8, wherein the determining, by the terminal device, that a CCE-to-REG mapping relationship within the first bandwidth in the control resource set is an interleaved mapping relationship comprises:
receiving, by the terminal device, second indication information from the network device, wherein the second indication information indicates that the CCE-to-REG mapping relationship within the first bandwidth in the control resource set is the interleaved mapping relationship.

10. A communication method, comprising:

determining, by a terminal device, a quantity of resource blocks RBs occupied by a first control resource set in frequency domain within a first bandwidth and a frequency domain start position of the first control resource set, and a quantity of RBs occupied by a second control resource set in frequency domain within a second bandwidth and a frequency domain start position of the second control resource set, wherein the first control resource set comprises detecting a physical downlink control channel PDCCH candidate used for scheduling a system information block 1 (SIB1), and the PDCCH is a PDCCH sent by a network device to schedule the SIB1; and the quantity of RBs of the first control resource set in frequency domain is less than a minimum quantity of RBs of the second control resource set in frequency domain; and
starting to detect, by the terminal device, the PDCCH at the frequency domain start position of the first control resource set.

11. The method according to claim 10, wherein the first bandwidth is less than the second bandwidth, and the second bandwidth comprises the first bandwidth.

12. The method according to claim 10 or 11, wherein the quantity of RBs occupied by the first control resource set in frequency domain is less than 24.

13. The method according to claim 12, wherein the quantity of RBs occupied by the first control resource set in frequency domain is one of 12, 15, 16, 18, and 20.

14. The method according to any one of claims 10 to 13, wherein a subcarrier spacing corresponding to the first control resource set is 15 kilohertz (kHz).

15. The method according to any one of claims 10 to 14, wherein a first offset offset corresponding to the first control resource set is different from a second offset offset corresponding to the second control resource set, the first offset is an offset between an SSB obtained through frequency domain alignment and a frequency domain lower boundary of the first control resource set, and the second offset is an offset between the SSB obtained through frequency domain alignment and a frequency domain lower boundary of the second control resource set.

16. The method according to claim 15, wherein the first offset offset is less than 0.

17. The method according to claim 16, wherein the first offset offset is one of -4 RBs, -3 RBs, -2 RBs, -1 RB, and 0 RBs.

18. The method according to any one of claims 10 to 17, wherein a quantity of time domain symbols of the first control resource set is 3.

19. A communication apparatus, comprising a processing unit and a communication unit, wherein

the processing unit is configured to determine a frequency domain start position of a control resource set, the control resource set is used for detecting a physical downlink control channel PDCCH candidate used for scheduling a system information block 1 (SIB1), and the PDCCH is a PDCCH sent by a network device to schedule the SIB1;

the processing unit is configured to determine, in the control resource set, a control channel element CCE index comprised in a PDCCH within a first bandwidth and a CCE index comprised in a PDCCH within a second bandwidth; and an offset exists between the CCE index within the first bandwidth and the CCE index within the second bandwidth; and

the processing unit is configured to detect the PDCCH based on the CCE index comprised in the PDCCH within the first bandwidth in the control resource set.

20. The communication apparatus according to claim 19, wherein the 1st CCE index in the CCE index within the second bandwidth is a CCE index 0, and a frequency domain start position of the CCE index 0 is the frequency domain start position of the control resource set.

21. The communication apparatus according to claim 19 or 20, wherein the first bandwidth is less than the second bandwidth, and the second bandwidth comprises the first bandwidth.

22. The communication apparatus according to any one of claims 19 to 21, wherein the processing unit is configured to determine that a CCE-to-resource element group REG mapping relationship within the first bandwidth in the control resource set is a non-interleaved mapping relationship.

23. The communication apparatus according to claim 22, wherein the communication unit is configured to receive first indication information from the network device, wherein the first indication information indicates that the CCE-to-REG mapping relationship within the first bandwidth in the control resource set is the non-interleaved mapping relationship.

24. The communication apparatus according to any one of claims 19 to 21, wherein the offset between the CCE index within the first bandwidth and the CCE index within the second bandwidth is related to a first parameter, and the first parameter is an offset offset between a synchronization signal block SSB obtained through frequency domain alignment and a frequency domain lower boundary of a control resource set corresponding to the 1st CCE within the second bandwidth.

25. The communication apparatus according to any one of claims 22 to 24, wherein a quantity of time domain symbols of the control resource set is 2.

26. The communication apparatus according to any one of claims 19 to 21, wherein the processing unit is configured to determine that a CCE-to-REG mapping relationship within the first bandwidth in the control resource set is an interleaved mapping relationship.

27. The communication apparatus according to claim 26, wherein the communication unit is configured to receive second indication information from the network device, wherein the second indication information indicates that the CCE-to-REG mapping relationship within the first bandwidth in the control resource set is the interleaved mapping relationship.

28. A communication apparatus, comprising a processing unit and a communication unit, wherein

the processing unit is configured to determine a quantity of resource blocks RBs occupied by a first control resource set in frequency domain within a first bandwidth and a frequency domain start position of the first control resource set, and a quantity of RBs occupied by a second control resource set in frequency domain within a second bandwidth and a frequency domain start position of the second control resource set, wherein the first control resource set comprises detecting a physical downlink control channel PDCCH candidate used for scheduling a system information block 1 (SIB1), and the PDCCH is a PDCCH sent by a network device to schedule the SIB1; and the quantity of RBs of the first control resource set in frequency domain is less than a minimum quantity of RBs of the second control resource set in frequency domain; and

the processing unit is configured to start to detect the PDCCH at the frequency domain start position of the first control resource set.

29. The communication apparatus according to claim 28, wherein the first bandwidth is less than the second bandwidth, and the second bandwidth comprises the first bandwidth.

**30.** The communication apparatus according to claim 28 or 29, wherein the quantity of RBs occupied by the first control resource set in frequency domain is less than 24.

**31.** The communication apparatus according to claim 30, wherein the quantity of RBs occupied by the first control resource set in frequency domain is one of 12, 15, 16, 18, and 20.

**32.** The communication apparatus according to any one of claims 28 to 31, wherein a subcarrier spacing corresponding to the first control resource set is 15 kilohertz kHz.

**33.** The communication apparatus according to any one of claims 28 to 32, wherein a first offset offset corresponding to the first control resource set is different from a second offset offset corresponding to the second control resource set, the first offset is an offset between an SSB obtained through frequency domain alignment and a frequency domain lower boundary of the first control resource set, and the second offset is an offset between the SSB obtained through frequency domain alignment and a frequency domain lower boundary of the second control resource set.

**34.** The communication apparatus according to claim 33, wherein the first offset offset is less than 0.

**35.** The communication apparatus according to claim 34, wherein the first offset offset is one of -4 RBs, -3 RBs, -2 RBs, -1 RB, and 0 RBs.

**36.** The communication apparatus according to claims 28 to 35, wherein a quantity of time domain symbols of the first control resource set is 3.

**37.** A communication apparatus, wherein the apparatus comprises at least one processor and a communication interface, and the at least one processor invokes a computer program or instructions stored in a memory to implement the method according to any one of claims 1 to 9.

**38.** A communication apparatus, wherein the apparatus comprises at least one processor and a communication interface, and the at least one processor invokes a computer program or instructions stored in a memory to implement the method according to any one of claims 10 to 18.

**39.** A computer-readable storage medium, wherein the computer-readable storage medium stores computer instructions; and when the computer instructions are run on a computer, the method according to any one of claims 1 to 18 is implemented.

FIG. 1

| | | | |
|---|---|---|---|
| CCE 7 | REG bundle 7 | REG 46 | REG 47 |
| | | REG 44 | REG 45 |
| | | REG 42 | REG 43 |
| CCE 6 | REG bundle 6 | REG 40 | REG 41 |
| | | REG 38 | REG 39 |
| | | REG 36 | REG 37 |
| CCE 5 | REG bundle 5 | REG 34 | REG 35 |
| | | REG 32 | REG 33 |
| | | REG 30 | REG 31 |
| CCE 4 | REG bundle 4 | REG 28 | REG 29 |
| | | REG 26 | REG 27 |
| | | REG 24 | REG 25 |
| CCE 3 | REG bundle 3 | REG 22 | REG 23 |
| | | REG 20 | REG 21 |
| | | REG 18 | REG 19 |
| CCE 2 | REG bundle 2 | REG 16 | REG 17 |
| | | REG 14 | REG 15 |
| | | REG 12 | REG 13 |
| CCE 1 | REG bundle 1 | REG 10 | REG 11 |
| | | REG 8 | REG 9 |
| | | REG 6 | REG 7 |
| CCE 0 | REG bundle 0 | REG 4 | REG 5 |
| | | REG 2 | REG 3 |
| | | REG 0 | REG 1 |

CCE: control channel element

REG bundle: resource element group bundle

REG: resource element group

FIG. 2

Sequence numbers of resource element group bundles REG bundles

Sequence numbers of control channel elements CCEs

FIG. 3

| CCE 7 | REG bundle 7 | REG 46 | REG 47 |
|---|---|---|---|
| | | REG 44 | REG 45 |
| | | REG 42 | REG 43 |
| CCE 5 | REG bundle 6 | REG 40 | REG 41 |
| | | REG 38 | REG 39 |
| | | REG 36 | REG 37 |
| CCE 3 | REG bundle 5 | REG 34 | REG 35 |
| | | REG 32 | REG 33 |
| | | REG 30 | REG 31 |
| CCE 1 | REG bundle 4 | REG 28 | REG 29 |
| | | REG 26 | REG 27 |
| | | REG 24 | REG 25 |
| CCE 6 | REG bundle 3 | REG 22 | REG 23 |
| | | REG 20 | REG 21 |
| | | REG 18 | REG 19 |
| CCE 4 | REG bundle 2 | REG 16 | REG 17 |
| | | REG 14 | REG 15 |
| | | REG 12 | REG 13 |
| CCE 2 | REG bundle 1 | REG 10 | REG 11 |
| | | REG 8 | REG 9 |
| | | REG 6 | REG 7 |
| CCE 0 | REG bundle 0 | REG 4 | REG 5 |
| | | REG 2 | REG 3 |
| | | REG 0 | REG 1 |

CCE: control channel element

REG bundle: resource element group bundle

REG: resource element group

FIG. 4

Uplink
Frequency band 28 (B28)

Downlink
Frequency band 28 (B28)

| Used for public LTE | 3 MHz | | | Used for public LTE | 3 MHz | |

703     733   736   748      758      788   791   803   Frequency
f (MHz)

Frequency band
68 (B68)

Frequency band
68 (B68)

5 MHz           5 MHz

698     703     728      753    758     783     Frequency
f (MHz)

FIG. 5

| CCE 7 | REG bundle 7 | REG 46 | REG 47 |
| | | REG 44 | REG 45 |
| | | REG 42 | REG 43 |
| CCE 5 | REG bundle 6 | REG 40 | REG 41 |
| | | REG 38 | REG 39 |
| | | REG 36 | REG 37 |
| CCE 3 | REG bundle 5 | REG 34 | REG 35 |
| | | REG 32 | REG 33 |
| | | REG 30 | REG 31 |
| CCE 1 | REG bundle 4 | REG 28 | REG 29 |
| | | REG 26 | REG 27 |
| | | REG 24 | REG 25 |
| CCE 6 | REG bundle 3 | REG 22 | REG 23 |
| | | REG 20 | REG 21 |
| | | REG 18 | REG 19 |
| CCE 4 | REG bundle 2 | REG 16 | REG 17 |
| | | REG 14 | REG 15 |
| | | REG 12 | REG 13 |
| CCE 2 | REG bundle 1 | REG 10 | REG 11 |
| | | REG 8 | REG 9 |
| | | REG 6 | REG 7 |
| CCE 0 | REG bundle 0 | REG 4 | REG 5 |
| | | REG 2 | REG 3 |
| | | REG 0 | REG 1 |

(a)

| CCE 11 | REG bundle 11 | REG 69 | REG 70 | REG 71 |
| | | REG 66 | REG 67 | REG 68 |
| CCE 9 | REG bundle 10 | REG 63 | REG 64 | REG 65 |
| | | REG 60 | REG 61 | REG 62 |
| CCE 7 | REG bundle 9 | REG 57 | REG 58 | REG 59 |
| | | REG 54 | REG 55 | REG 56 |
| CCE 5 | REG bundle 8 | REG 51 | REG 52 | REG 53 |
| | | REG 48 | REG 49 | REG 50 |
| CCE 3 | REG bundle 7 | REG 45 | REG 46 | REG 47 |
| | | REG 42 | REG 43 | REG 44 |
| CCE 1 | REG bundle 6 | REG 39 | REG 40 | REG 41 |
| | | REG 36 | REG 37 | REG 38 |
| CCE 10 | REG bundle 5 | REG 33 | REG 34 | REG 35 |
| | | REG 30 | REG 31 | REG 32 |
| CCE 8 | REG bundle 4 | REG 27 | REG 28 | REG 29 |
| | | REG 24 | REG 25 | REG 26 |
| CCE 6 | REG bundle 3 | REG 21 | REG 22 | REG 23 |
| | | REG 18 | REG 19 | REG 20 |
| CCE 4 | REG bundle 2 | REG 15 | REG 16 | REG 17 |
| | | REG 12 | REG 13 | REG 14 |
| CCE 2 | REG bundle 1 | REG 9 | REG 10 | REG 11 |
| | | REG 6 | REG 7 | REG 8 |
| CCE 0 | REG bundle 0 | REG 3 | REG 4 | REG 5 |
| | | REG 0 | REG 1 | REG 2 |

(b)

CCE: control channel element

REG bundle: resource element group bundle

REG: resource element group

FIG. 6

(a)

16 resource blocks RBs

| CCE | REG bundle | | |
|---|---|---|---|
| CCE 7 | REG bundle 7 | REG 46 | REG 47 |
| | | REG 44 | REG 45 |
| | | REG 42 | REG 43 |
| CCE 5 | REG bundle 6 | REG 40 | REG 41 |
| | | REG 38 | REG 39 |
| | | REG 36 | REG 37 |
| CCE 3 | REG bundle 5 | REG 34 | REG 35 |
| | | REG 32 | REG 33 |
| | | REG 30 | REG 31 |
| CCE 1 | REG bundle 4 | REG 28 | REG 29 |
| | | REG 26 | REG 27 |
| | | REG 24 | REG 25 |
| CCE 6 | REG bundle 3 | REG 22 | REG 23 |
| | | REG 20 | REG 21 |
| | | REG 18 | REG 19 |
| CCE 4 | REG bundle 2 | REG 16 | REG 17 |
| | | REG 14 | REG 15 |
| | | REG 12 | REG 13 |
| CCE 2 | REG bundle 1 | REG 10 | REG 11 |
| | | REG 8 | REG 9 |
| | | REG 6 | REG 7 |
| CCE 0 | REG bundle 0 | REG 4 | REG 5 |
| | | REG 2 | REG 3 |
| | | REG 0 | REG 1 |

(b)

16 resource blocks RBs

| CCE | REG bundle | | | |
|---|---|---|---|---|
| CCE 11 | REG bundle 11 | REG 69 | REG 70 | REG 71 |
| | | REG 66 | REG 67 | REG 68 |
| CCE 9 | REG bundle 10 | REG 63 | REG 64 | REG 65 |
| | | REG 60 | REG 61 | REG 62 |
| CCE 7 | REG bundle 9 | REG 57 | REG 58 | REG 59 |
| | | REG 54 | REG 55 | REG 56 |
| CCE 5 | REG bundle 8 | REG 51 | REG 52 | REG 53 |
| | | REG 48 | REG 49 | REG 50 |
| CCE 3 | REG bundle 7 | REG 45 | REG 46 | REG 47 |
| | | REG 42 | REG 43 | REG 44 |
| CCE 1 | REG bundle 6 | REG 39 | REG 40 | REG 41 |
| | | REG 36 | REG 37 | REG 38 |
| CCE 10 | REG bundle 5 | REG 33 | REG 34 | REG 35 |
| | | REG 30 | REG 31 | REG 32 |
| CCE 8 | REG bundle 4 | REG 27 | REG 28 | REG 29 |
| | | REG 24 | REG 25 | REG 26 |
| CCE 6 | REG bundle 3 | REG 21 | REG 22 | REG 23 |
| | | REG 18 | REG 19 | REG 20 |
| CCE 4 | REG bundle 2 | REG 15 | REG 16 | REG 17 |
| | | REG 12 | REG 13 | REG 14 |
| CCE 2 | REG bundle 1 | REG 9 | REG 10 | REG 11 |
| | | REG 6 | REG 7 | REG 8 |
| CCE 0 | REG bundle 0 | REG 3 | REG 4 | REG 5 |
| | | REG 0 | REG 1 | REG 2 |

CCE: control channel element
REG bundle: resource element group bundle
REG: resource element group

FIG. 7

Network device

Terminal device

S801: Send a PDCCH used
for scheduling an SIB1

S802: Receive the PDCCH used for scheduling the SIB1

S803: Determine a frequency domain start position of a
control resource set

S804: Determine, in the control resource set, a CCE index
included in a PDCCH within a first bandwidth and a CCE
index included in a PDCCH within a second bandwidth

S805: Detect the PDCCH based on the CCE index included
in the PDCCH within the first bandwidth

FIG. 8

| | | | | |
|---|---|---|---|---|
| CCE 7 | REG bundle 7 | REG 46 | REG 47 | |
| | | REG 44 | REG 45 | |
| | | REG 42 | REG 43 | |
| CCE 5 | REG bundle 6 | REG 40 | REG 41 | |
| | | REG 38 | REG 39 | |
| | | REG 36 | REG 37 | |
| CCE 3 | REG bundle 5 | REG 34 | REG 35 | |
| | | REG 32 | REG 33 | |
| | | REG 30 | REG 31 | |
| CCE 1 | REG bundle 4 | REG 28 | REG 29 | |
| | | REG 26 | REG 27 | |
| | | REG 24 | REG 25 | |
| CCE 6 | REG bundle 3 | REG 22 | REG 23 | |
| | | REG 20 | REG 21 | |
| | | REG 18 | REG 19 | |
| CCE 4 | REG bundle 2 | REG 16 | REG 17 | |
| | | REG 14 | REG 15 | |
| | | REG 12 | REG 13 | |
| CCE 2 | REG bundle 1 | REG 10 | REG 11 | |
| | | REG 8 | REG 9 | |
| | | REG 6 | REG 7 | |
| CCE 0 | REG bundle 0 | REG 4 | REG 5 | |
| | | REG 2 | REG 3 | |
| | | REG 0 | REG 1 | |

Second bandwidth (24 resource blocks RBs)

First bandwidth (16 resource blocks RBs)

Frequency domain start position of the 1st CCE index in a CCE index included in a PDCCH within the second bandwidth

CCE: control channel element
REG bundle: resource element group bundle
REG: resource element group

FIG. 9

| | | REG 46 | REG 47 |
|---|---|---|---|
| CCE 7 | REG bundle 7 | REG 44 | REG 45 |
| | | REG 42 | REG 43 |
| CCE 6 | REG bundle 6 | REG 40 | REG 41 |
| | | REG 38 | REG 39 |
| | | REG 36 | REG 37 |
| CCE 5 | REG bundle 5 | REG 34 | REG 35 |
| | | REG 32 | REG 33 |
| | | REG 30 | REG 31 |
| CCE 4 | REG bundle 4 | REG 28 | REG 29 |
| | | REG 26 | REG 27 |
| | | REG 24 | REG 25 |
| CCE 3 | REG bundle 3 | REG 22 | REG 23 |
| | | REG 20 | REG 21 |
| | | REG 18 | REG 19 |
| CCE 2 | REG bundle 2 | REG 16 | REG 17 |
| | | REG 14 | REG 15 |
| | | REG 12 | REG 13 |
| CCE 1 | REG bundle 1 | REG 10 | REG 11 |
| | | REG 8 | REG 9 |
| | | REG 6 | REG 7 |
| CCE 0 | REG bundle 0 | REG 4 | REG 5 |
| | | REG 2 | REG 3 |
| | | REG 0 | REG 1 |

16 resource blocks RBs

Frequency domain start position of the 1$^{st}$ CCE index in a CCE index included in a PDCCH within a first bandwidth

Primary synchronization signal PSS

Physical broadcast channel PBCH

Secondary synchronization signal SSS

FIG. 10

| | | | | |
|---|---|---|---|---|
| CCE 11 | REG bundle 11 | REG 69 | REG 70 | REG 71 |
| | | REG 66 | REG 67 | REG 68 |
| CCE 9 | REG bundle 10 | REG 63 | REG 64 | REG 65 |
| | | REG 60 | REG 61 | REG 62 |
| CCE 7 | REG bundle 9 | REG 57 | REG 58 | REG 59 |
| | | REG 54 | REG 55 | REG 56 |
| CCE 5 | REG bundle 8 | REG 51 | REG 52 | REG 53 |
| | | REG 48 | REG 49 | REG 50 |
| CCE 3 | REG bundle 7 | REG 45 | REG 46 | REG 47 |
| | | REG 42 | REG 43 | REG 44 |
| CCE 1 | REG bundle 6 | REG 39 | REG 40 | REG 41 |
| | | REG 36 | REG 37 | REG 38 |
| CCE 10 | REG bundle 5 | REG 33 | REG 34 | REG 35 |
| | | REG 30 | REG 31 | REG 32 |
| CCE 8 | REG bundle 4 | REG 27 | REG 28 | REG 29 |
| | | REG 24 | REG 25 | REG 26 |
| CCE 6 | REG bundle 3 | REG 21 | REG 22 | REG 23 |
| | | REG 18 | REG 19 | REG 20 |
| CCE 4 | REG bundle 2 | REG 15 | REG 16 | REG 17 |
| | | REG 12 | REG 13 | REG 14 |
| CCE 2 | REG bundle 1 | REG 9 | REG 10 | REG 11 |
| | | REG 6 | REG 7 | REG 8 |
| CCE 0 | REG bundle 0 | REG 3 | REG 4 | REG 5 |
| | | REG 0 | REG 1 | REG 2 |

16 resource blocks RBs

TO FIG. 11(b)

Frequency domain start position of the 1st CCE index in a CCE index included in a PDCCH within a first bandwidth

FIG. 11(a)

Primary synchronization signal PSS

Physical broadcast channel PBCH

Secondary synchronization signal SSS

| CCE 11 | REG bundle 11 | REG 69 | REG 70 | REG 71 |
|--------|---------------|--------|--------|--------|
|        |               | REG 66 | REG 67 | REG 68 |
| CCE 9  | REG bundle 10 | REG 63 | REG 64 | REG 65 |
|        |               | REG 60 | REG 61 | REG 62 |
| CCE 7  | REG bundle 9  | REG 57 | REG 58 | REG 59 |
|        |               | REG 54 | REG 55 | REG 56 |
| CCE 5  | REG bundle 8  | REG 51 | REG 52 | REG 53 |
|        |               | REG 48 | REG 49 | REG 50 |
| CCE 3  | REG bundle 7  | REG 45 | REG 46 | REG 47 |
|        |               | REG 42 | REG 43 | REG 44 |
| CCE 1  | REG bundle 6  | REG 39 | REG 40 | REG 41 |
|        |               | REG 36 | REG 37 | REG 38 |
| CCE 10 | REG bundle 5  | REG 33 | REG 34 | REG 35 |
|        |               | REG 30 | REG 31 | REG 32 |
| CCE 8  | REG bundle 4  | REG 27 | REG 28 | REG 29 |
|        |               | REG 24 | REG 25 | REG 26 |
| CCE 6  | REG bundle 3  | REG 21 | REG 22 | REG 23 |
|        |               | REG 18 | REG 19 | REG 20 |
| CCE 4  | REG bundle 2  | REG 15 | REG 16 | REG 17 |
|        |               | REG 12 | REG 13 | REG 14 |
| CCE 2  | REG bundle 1  | REG 9  | REG 10 | REG 11 |
|        |               | REG 6  | REG 7  | REG 8  |
| CCE 0  | REG bundle 0  | REG 3  | REG 4  | REG 5  |
|        |               | REG 0  | REG 1  | REG 2  |

CONT. FROM FIG.11(a)

TO FIG. 11(c)

Frequency domain start position of the 1st CCE index in a CCE index included in a PDCCH within a first bandwidth

FIG. 11(b)

Primary synchronization signal PSS

Physical broadcast channel PBCH

Secondary synchronization signal SSS

| CCE 11 | REG bundle 11 | REG 69 | REG 70 | REG 71 |
|---|---|---|---|---|
| | | REG 66 | REG 67 | REG 68 |
| CCE 9 | REG bundle 10 | REG 63 | REG 64 | REG 65 |
| | | REG 60 | REG 61 | REG 62 |
| CCE 7 | REG bundle 9 | REG 57 | REG 58 | REG 59 |
| | | REG 54 | REG 55 | REG 56 |
| CCE 5 | REG bundle 8 | REG 51 | REG 52 | REG 53 |
| | | REG 48 | REG 49 | REG 50 |
| CCE 3 | REG bundle 7 | REG 45 | REG 46 | REG 47 |
| | | REG 42 | REG 43 | REG 44 |
| CCE 1 | REG bundle 6 | REG 39 | REG 40 | REG 41 |
| | | REG 36 | REG 37 | REG 38 |
| CCE 10 | REG bundle 5 | REG 33 | REG 34 | REG 35 |
| | | REG 30 | REG 31 | REG 32 |
| CCE 8 | REG bundle 4 | REG 27 | REG 28 | REG 29 |
| | | REG 24 | REG 25 | REG 26 |
| CCE 6 | REG bundle 3 | REG 21 | REG 22 | REG 23 |
| | | REG 18 | REG 19 | REG 20 |
| CCE 4 | REG bundle 2 | REG 15 | REG 16 | REG 17 |
| | | REG 12 | REG 13 | REG 14 |
| CCE 2 | REG bundle 1 | REG 9 | REG 10 | REG 11 |
| | | REG 6 | REG 7 | REG 8 |
| CCE 0 | REG bundle 0 | REG 3 | REG 4 | REG 5 |
| | | REG 0 | REG 1 | REG 2 |

CONT. FROM FIG.11(b)

16 resource blocks RBs

Frequency domain start position of the 1st CCE index in a CCE index included in a PDCCH within a first bandwidth

FIG. 11(c)

Primary synchronization signal PSS

Physical broadcast channel PBCH

Secondary synchronization signal SSS

| CCE | REG bundle | REG 46 | REG 47 |
| | | REG 44 | REG 45 |
| | | REG 42 | REG 43 |
| CCE | REG bundle | REG 40 | REG 41 |
| | | REG 38 | REG 39 |
| | | REG 36 | REG 37 |
| CCE 3 | REG bundle 3 | REG 34 | REG 35 |
| | | REG 32 | REG 33 |
| | | REG 30 | REG 31 |
| CCE 2 | REG bundle 2 | REG 28 | REG 29 |
| | | REG 26 | REG 27 |
| | | REG 24 | REG 25 |
| CCE 1 | REG bundle 1 | REG 22 | REG 23 |
| | | REG 20 | REG 21 |
| | | REG 18 | REG 19 |
| CCE 0 | REG bundle 0 | REG 16 | REG 17 |
| | | REG 14 | REG 15 |
| | | REG 12 | REG 13 |
| CCE | REG bundle | REG 10 | REG 11 |
| | | REG 8 | REG 9 |
| | | REG 6 | REG 7 |
| CCE | REG bundle | REG 4 | REG 5 |
| | | REG 2 | REG 3 |
| | | REG 0 | REG 1 |

16 resource blocks RBs

Frequency domain start position of the 1$^{st}$ CCE index in a CCE index included in a PDCCH within a first bandwidth

Primary synchronization signal PSS

Physical broadcast channel PBCH

Secondary synchronization signal SSS

FIG. 12

| | | REG 46 | REG 47 |
|---|---|---|---|
| CCE 7 | REG bundle 7 | REG 44 | REG 45 |
| | | REG 42 | REG 43 |
| CCE 6 | REG bundle 6 | REG 40 | REG 41 |
| | | REG 38 | REG 39 |
| | | REG 36 | REG 37 |
| CCE 5 | REG bundle 5 | REG 34 | REG 35 |
| | | REG 32 | REG 33 |
| | | REG 30 | REG 31 |
| CCE 4 | REG bundle 4 | REG 28 | REG 29 |
| | | REG 26 | REG 27 |
| | | REG 24 | REG 25 |
| CCE 3 | REG bundle 3 | REG 22 | REG 23 |
| | | REG 20 | REG 21 |
| | | REG 18 | REG 19 |
| CCE 2 | REG bundle 2 | REG 16 | REG 17 |
| | | REG 14 | REG 15 |
| | | REG 12 | REG 13 |
| CCE 1 | REG bundle 1 | REG 10 | REG 11 |
| | | REG 8 | REG 9 |
| | | REG 6 | REG 7 |
| CCE 0 | REG bundle 0 | REG 4 | REG 5 |
| | | REG 2 | REG 3 |
| | | REG 0 | REG 1 |

16 resource blocks RBs

TO FIG. 13(b)

Frequency domain start position of the 1$^{st}$ CCE index in a CCE index included in a PDCCH within a first bandwidth

FIG. 13(a)

Primary synchronization signal PSS

Physical broadcast channel PBCH

Secondary synchronization signal SSS

CONT. FROM FIG. 13(a)

| CCE 7 | REG bundle 7 | REG 46 | REG 47 |
| | | REG 44 | REG 45 |
| | | REG 42 | REG 43 |
| CCE 6 | REG bundle 6 | REG 40 | REG 41 |
| | | REG 38 | REG 39 |
| | | REG 36 | REG 37 |
| CCE 5 | REG bundle 5 | REG 34 | REG 35 |
| | | REG 32 | REG 33 |
| | | REG 30 | REG 31 |
| CCE 4 | REG bundle 4 | REG 28 | REG 29 |
| | | REG 26 | REG 27 |
| | | REG 24 | REG 25 |
| CCE 3 | REG bundle 3 | REG 22 | REG 23 |
| | | REG 20 | REG 21 |
| | | REG 18 | REG 19 |
| CCE 2 | REG bundle 2 | REG 16 | REG 17 |
| | | REG 14 | REG 15 |
| | | REG 12 | REG 13 |
| CCE 1 | REG bundle 1 | REG 10 | REG 11 |
| | | REG 8 | REG 9 |
| | | REG 6 | REG 7 |
| CCE 0 | REG bundle 0 | REG 4 | REG 5 |
| | | REG 2 | REG 3 |
| | | REG 0 | REG 1 |

Frequency domain start position of the 1st CCE index in a CCE index included in a PDCCH within a first bandwidth

FIG. 13(b)

| CCE 7 | REG bundle 7 | REG 46 | REG 47 |
| | | REG 44 | REG 45 |
| | | REG 42 | REG 43 |
| CCE 6 | REG bundle 6 | REG 40 | REG 41 |
| | | REG 38 | REG 39 |
| | | REG 36 | REG 37 |
| CCE 5 | REG bundle 5 | REG 34 | REG 35 |
| | | REG 32 | REG 33 |
| | | REG 30 | REG 31 |
| CCE 4 | REG bundle 4 | REG 28 | REG 29 |
| | | REG 26 | REG 27 |
| | | REG 24 | REG 25 |
| CCE 3 | REG bundle 3 | REG 22 | REG 23 |
| | | REG 20 | REG 21 |
| | | REG 18 | REG 19 |
| CCE 2 | REG bundle 2 | REG 16 | REG 17 |
| | | REG 14 | REG 15 |
| | | REG 12 | REG 13 |
| CCE 1 | REG bundle 1 | REG 10 | REG 11 |
| | | REG 8 | REG 9 |
| | | REG 6 | REG 7 |
| CCE 0 | REG bundle 0 | REG 4 | REG 5 |
| | | REG 2 | REG 3 |
| | | REG 0 | REG 1 |

Frequency domain start position of the 1st CCE index in a CCE index included in a PDCCH within a first bandwidth

FIG. 13(c)

Primary synchronization signal PSS

Physical broadcast channel PBCH

Secondary synchronization signal SSS

| | | REG 46 | REG 47 |
|---|---|---|---|
| CCE 7 | REG bundle 7 | REG 44 | REG 45 |
| | | REG 42 | REG 43 |
| CCE 6 | REG bundle 6 | REG 40 | REG 41 |
| | | REG 38 | REG 39 |
| | | REG 36 | REG 37 |
| CCE 5 | REG bundle 5 | REG 34 | REG 35 |
| | | REG 32 | REG 33 |
| | | REG 30 | REG 31 |
| CCE 4 | REG bundle 4 | REG 28 | REG 29 |
| | | REG 26 | REG 27 |
| | | REG 24 | REG 25 |
| CCE 3 | REG bundle 3 | REG 22 | REG 23 |
| | | REG 20 | REG 21 |
| | | REG 18 | REG 19 |
| CCE 2 | REG bundle 2 | REG 16 | REG 17 |
| | | REG 14 | REG 15 |
| | | REG 12 | REG 13 |
| CCE 1 | REG bundle 1 | REG 10 | REG 11 |
| | | REG 8 | REG 9 |
| | | REG 6 | REG 7 |
| CCE 0 | REG bundle 0 | REG 4 | REG 5 |
| | | REG 2 | REG 3 |
| | | REG 0 | REG 1 |

16 resource blocks RBs

TO FIG. 14(b)

Frequency domain start position of the 1st CCE index in a CCE index included in a PDCCH within a first bandwidth

FIG. 14(a)

Primary synchronization signal PSS

Physical broadcast channel PBCH

Secondary synchronization signal SSS

| | | REG 46 | REG 47 |
|---|---|---|---|
| CCE 7 | REG bundle 7 | REG 44 | REG 45 |
| | | REG 42 | REG 43 |
| CCE 6 | REG bundle 6 | REG 40 | REG 41 |
| | | REG 38 | REG 39 |
| | | REG 36 | REG 37 |
| CCE 5 | REG bundle 5 | REG 34 | REG 35 |
| | | REG 32 | REG 33 |
| | | REG 30 | REG 31 |
| CCE 4 | REG bundle 4 | REG 28 | REG 29 |
| | | REG 26 | REG 27 |
| | | REG 24 | REG 25 |
| CCE 3 | REG bundle 3 | REG 22 | REG 23 |
| | | REG 20 | REG 21 |
| | | REG 18 | REG 19 |
| CCE 2 | REG bundle 2 | REG 16 | REG 17 |
| | | REG 14 | REG 15 |
| | | REG 12 | REG 13 |
| CCE 1 | REG bundle 1 | REG 10 | REG 11 |
| | | REG 8 | REG 9 |
| | | REG 6 | REG 7 |
| CCE 0 | REG bundle 0 | REG 4 | REG 5 |
| | | REG 2 | REG 3 |
| | | REG 0 | REG 1 |

| | | REG 46 | REG 47 |
|---|---|---|---|
| CCE 7 | REG bundle 7 | REG 44 | REG 45 |
| | | REG 42 | REG 43 |
| CCE 6 | REG bundle 6 | REG 40 | REG 41 |
| | | REG 38 | REG 39 |
| | | REG 36 | REG 37 |
| CCE 5 | REG bundle 5 | REG 34 | REG 35 |
| | | REG 32 | REG 33 |
| | | REG 30 | REG 31 |
| CCE 4 | REG bundle 4 | REG 28 | REG 29 |
| | | REG 26 | REG 27 |
| | | REG 24 | REG 25 |
| CCE 3 | REG bundle 3 | REG 22 | REG 23 |
| | | REG 20 | REG 21 |
| | | REG 18 | REG 19 |
| CCE 2 | REG bundle 2 | REG 16 | REG 17 |
| | | REG 14 | REG 15 |
| | | REG 12 | REG 13 |
| CCE 1 | REG bundle 1 | REG 10 | REG 11 |
| | | REG 8 | REG 9 |
| | | REG 6 | REG 7 |
| CCE 0 | REG bundle 0 | REG 4 | REG 5 |
| | | REG 2 | REG 3 |
| | | REG 0 | REG 1 |

CONT.
FROM
FIG.
14(a)

Frequency domain start position of the 1$^{st}$ CCE index in a CCE index included in a PDCCH within a first bandwidth

Frequency domain start position of the 1$^{st}$ CCE index in a CCE index included in a PDCCH within a first bandwidth

FIG. 14(b)                    FIG. 14(c)

Primary synchronization signal PSS

Physical broadcast channel PBCH

Secondary synchronization signal SSS

44

```
┌──────────┐                        ┌──────────┐
│ Network  │                        │ Terminal │
│ device   │                        │ device   │
└────┬─────┘                        └────┬─────┘
     │    S1501: Send a PDCCH used       │
     │      for scheduling an SIB1       │
     │──────────────────────────────────▶│
     │                                   │
     │    ┌──────────────────────────────────────────────┐
     │    │ S1502: Receive the PDCCH used for scheduling the SIB1 │
     │    └──────────────────────────────────────────────┘
     │                                   │
     │    ┌──────────────────────────────────────────────┐
     │    │ S1503: Determine a quantity of RBs occupied by a first │
     │    │ control resource set in frequency domain within a first │
     │    │ bandwidth and a frequency domain start position, and a │
     │    │ quantity of RBs occupied by a second control resource set │
     │    │ in frequency domain within a second bandwidth and a │
     │    │ frequency domain start position │
     │    └──────────────────────────────────────────────┘
     │                                   │
     │    ┌──────────────────────────────────────────────┐
     │    │ S1504: Start to detect the PDCCH at the frequency domain │
     │    │ start position of the first control resource set within the │
     │    │ first bandwidth │
     │    └──────────────────────────────────────────────┘
     │                                   │
```

FIG. 15

| | | | REG 46 | REG 47 |
|---|---|---|---|---|
| | | | REG 44 | REG 45 |
| | | | REG 42 | REG 43 |
| | | | REG 40 | REG 41 |
| | | | REG 38 | REG 39 |
| | | | REG 36 | REG 37 |
| | CCE 3 | REG bundle 3 | REG 34 | REG 35 |
| | | | REG 32 | REG 33 |
| | | | REG 30 | REG 31 |
| | CCE 2 | REG bundle 2 | REG 28 | REG 29 |
| | | | REG 26 | REG 27 |
| | | | REG 24 | REG 25 |
| | CCE 1 | REG bundle 1 | REG 22 | REG 23 |
| | | | REG 20 | REG 21 |
| | | | REG 18 | REG 19 |
| | CCE 0 | REG bundle 0 | REG 16 | REG 17 |
| | | | REG 14 | REG 15 |
| | | | REG 12 | REG 13 |
| | | | REG 10 | REG 11 |
| | | | REG 8 | REG 9 |
| | | | REG 6 | REG 7 |
| | | | REG 4 | REG 5 |
| | | | REG 2 | REG 3 |
| | | | REG 0 | REG 1 |

16 resource blocks RBs

Frequency domain start position of a first control resource set

Primary synchronization signal PSS

Physical broadcast channel PBCH

Secondary synchronization signal SSS

FIG. 16

| CCE | REG bundle | REG 69 | REG 70 | REG 71 |
|---|---|---|---|---|
| | | REG 66 | REG 67 | REG 68 |
| CCE | REG bundle | REG 63 | REG 64 | REG 65 |
| | | REG 60 | REG 61 | REG 62 |
| CCE | REG bundle | REG 57 | REG 58 | REG 59 |
| | | REG 54 | REG 55 | REG 56 |
| CCE 7 | REG bundle 7 | REG 51 | REG 52 | REG 53 |
| | | REG 48 | REG 49 | REG 50 |
| CCE 5 | REG bundle 6 | REG 45 | REG 46 | REG 47 |
| | | REG 42 | REG 43 | REG 44 |
| CCE 3 | REG bundle 5 | REG 39 | REG 40 | REG 41 |
| | | REG 36 | REG 37 | REG 38 |
| CCE 1 | REG bundle 4 | REG 33 | REG 34 | REG 35 |
| | | REG 30 | REG 31 | REG 32 |
| CCE 6 | REG bundle 3 | REG 27 | REG 28 | REG 29 |
| | | REG 24 | REG 25 | REG 26 |
| CCE 4 | REG bundle 2 | REG 21 | REG 22 | REG 23 |
| | | REG 18 | REG 19 | REG 20 |
| CCE 2 | REG bundle 1 | REG 15 | REG 16 | REG 17 |
| | | REG 12 | REG 13 | REG 14 |
| CCE 0 | REG bundle 0 | REG 9 | REG 10 | REG 11 |
| | | REG 6 | REG 7 | REG 8 |
| CCE | REG bundle | REG 3 | REG 4 | REG 5 |
| | | REG 0 | REG 1 | REG 2 |

16 resource blocks RBs

TO FIG. 17(b)

Frequency domain start position of a first control resource set

FIG. 17(a)

Primary synchronization signal PSS

Physical broadcast channel PBCH

Secondary synchronization signal SSS

| CCE | REG bundle | REG 69 | REG 70 | REG 71 |
| | | REG 66 | REG 67 | REG 68 |
| CCE | REG bundle | REG 63 | REG 64 | REG 65 |
| | | REG 60 | REG 61 | REG 62 |
| CCE | REG bundle | REG 57 | REG 58 | REG 59 |
| | | REG 54 | REG 55 | REG 56 |
| CCE 7 | REG bundle 7 | REG 51 | REG 52 | REG 53 |
| | | REG 48 | REG 49 | REG 50 |
| CCE 5 | REG bundle 6 | REG 45 | REG 46 | REG 47 |
| | | REG 42 | REG 43 | REG 44 |
| CCE 3 | REG bundle 5 | REG 39 | REG 40 | REG 41 |
| | | REG 36 | REG 37 | REG 38 |
| CCE 1 | REG bundle 4 | REG 33 | REG 34 | REG 35 |
| | | REG 30 | REG 31 | REG 32 |
| CCE 6 | REG bundle 3 | REG 27 | REG 28 | REG 29 |
| | | REG 24 | REG 25 | REG 26 |
| CCE 4 | REG bundle 2 | REG 21 | REG 22 | REG 23 |
| | | REG 18 | REG 19 | REG 20 |
| CCE 2 | REG bundle 1 | REG 15 | REG 16 | REG 17 |
| | | REG 12 | REG 13 | REG 14 |
| CCE 0 | REG bundle 0 | REG 9 | REG 10 | REG 11 |
| | | REG 6 | REG 7 | REG 8 |
| CCE | REG bundle | REG 3 | REG 4 | REG 5 |
| | | REG 0 | REG 1 | REG 2 |

CONT. FROM FIG.17(a)

TO FIG. 17(c)

Frequency domain start position of a first control resource set

FIG. 17(b)

▨ Primary synchronization signal PSS

▨ Physical broadcast channel PBCH

▨ Secondary synchronization signal SSS

| CCE | REG bundle | REG 69 | REG 70 | REG 71 |
| | | REG 66 | REG 67 | REG 68 |
| CCE | REG bundle | REG 63 | REG 64 | REG 65 |
| | | REG 60 | REG 61 | REG 62 |
| CCE | REG bundle | REG 57 | REG 58 | REG 59 |
| | | REG 54 | REG 55 | REG 56 |
| CCE 7 | REG bundle 7 | REG 51 | REG 52 | REG 53 |
| | | REG 48 | REG 49 | REG 50 |
| CCE 5 | REG bundle 6 | REG 45 | REG 46 | REG 47 |
| | | REG 42 | REG 43 | REG 44 |
| CCE 3 | REG bundle 5 | REG 39 | REG 40 | REG 41 |
| | | REG 36 | REG 37 | REG 38 |
| CCE 1 | REG bundle 4 | REG 33 | REG 34 | REG 35 |
| | | REG 30 | REG 31 | REG 32 |
| CCE 6 | REG bundle 3 | REG 27 | REG 28 | REG 29 |
| | | REG 24 | REG 25 | REG 26 |
| CCE 4 | REG bundle 2 | REG 21 | REG 22 | REG 23 |
| | | REG 18 | REG 19 | REG 20 |
| CCE 2 | REG bundle 1 | REG 15 | REG 16 | REG 17 |
| | | REG 12 | REG 13 | REG 14 |
| CCE 0 | REG bundle 0 | REG 9 | REG 10 | REG 11 |
| | | REG 6 | REG 7 | REG 8 |
| CCE | REG bundle | REG 3 | REG 4 | REG 5 |
| | | REG 0 | REG 1 | REG 2 |

CONT. FROM FIG.17(b)

16 resource blocks RBs

Frequency domain start position of a first control resource set

FIG. 17(c)

Primary synchronization signal PSS

Physical broadcast channel PBCH

Secondary synchronization signal SSS

Frequency domain start position of a
first control resource set

FIG. 18(a)

Primary synchronization signal PSS

Physical broadcast channel PBCH

Secondary synchronization signal SSS

| CCE | REG bundle | REG 69 | REG 70 | REG 71 |
|---|---|---|---|---|
| | | REG 66 | REG 67 | REG 68 |
| CCE 9 | REG bundle 9 | REG 63 | REG 64 | REG 65 |
| | | REG 60 | REG 61 | REG 62 |
| CCE 7 | REG bundle 8 | REG 57 | REG 58 | REG 59 |
| | | REG 54 | REG 55 | REG 56 |
| CCE 5 | REG bundle 7 | REG 51 | REG 52 | REG 53 |
| | | REG 48 | REG 49 | REG 50 |
| CCE 3 | REG bundle 6 | REG 45 | REG 46 | REG 47 |
| | | REG 42 | REG 43 | REG 44 |
| CCE 1 | REG bundle 5 | REG 39 | REG 40 | REG 41 |
| | | REG 36 | REG 37 | REG 38 |
| CCE 8 | REG bundle 4 | REG 33 | REG 34 | REG 35 |
| | | REG 30 | REG 31 | REG 32 |
| CCE 6 | REG bundle 3 | REG 27 | REG 28 | REG 29 |
| | | REG 24 | REG 25 | REG 26 |
| CCE 4 | REG bundle 2 | REG 21 | REG 22 | REG 23 |
| | | REG 18 | REG 19 | REG 20 |
| CCE 2 | REG bundle 1 | REG 15 | REG 16 | REG 17 |
| | | REG 12 | REG 13 | REG 14 |
| CCE 0 | REG bundle 0 | REG 9 | REG 10 | REG 11 |
| | | REG 6 | REG 7 | REG 8 |
| CCE | REG bundle | REG 3 | REG 4 | REG 5 |
| | | REG 0 | REG 1 | REG 2 |

CONT.
FROM
FIG.18(a)

TO
FIG.
18(c)

Frequency domain start position of a
first control resource set

FIG. 18(b)

Primary synchronization signal PSS

Physical broadcast channel PBCH

Secondary synchronization signal SSS

| CCE | REG bundle | REG 69 | REG 70 | REG 71 |
| --- | --- | --- | --- | --- |
| | | REG 66 | REG 67 | REG 68 |
| CCE 9 | REG bundle 9 | REG 63 | REG 64 | REG 65 |
| | | REG 60 | REG 61 | REG 62 |
| CCE 7 | REG bundle 8 | REG 57 | REG 58 | REG 59 |
| | | REG 54 | REG 55 | REG 56 |
| CCE 5 | REG bundle 7 | REG 51 | REG 52 | REG 53 |
| | | REG 48 | REG 49 | REG 50 |
| CCE 3 | REG bundle 6 | REG 45 | REG 46 | REG 47 |
| | | REG 42 | REG 43 | REG 44 |
| CCE 1 | REG bundle 5 | REG 39 | REG 40 | REG 41 |
| | | REG 36 | REG 37 | REG 38 |
| CCE 8 | REG bundle 4 | REG 33 | REG 34 | REG 35 |
| | | REG 30 | REG 31 | REG 32 |
| CCE 6 | REG bundle 3 | REG 27 | REG 28 | REG 29 |
| | | REG 24 | REG 25 | REG 26 |
| CCE 4 | REG bundle 2 | REG 21 | REG 22 | REG 23 |
| | | REG 18 | REG 19 | REG 20 |
| CCE 2 | REG bundle 1 | REG 15 | REG 16 | REG 17 |
| | | REG 12 | REG 13 | REG 14 |
| CCE 0 | REG bundle 0 | REG 9 | REG 10 | REG 11 |
| | | REG 6 | REG 7 | REG 8 |
| CCE | REG bundle | REG 3 | REG 4 | REG 5 |
| | | REG 0 | REG 1 | REG 2 |

CONT. FROM FIG.18(b)

16 resource blocks RBs

Frequency domain start position of a first control resource set

FIG. 18(c)

Primary synchronization signal PSS

Physical broadcast channel PBCH

Secondary synchronization signal SSS

Communication
apparatus 1900

Processing unit 1901

Communication unit
1902

FIG. 19

2000

Communication
apparatus

2003

Communication
interface

2001

Processor

2004

2002

Memory

FIG. 20

## INTERNATIONAL SEARCH REPORT

| | International application No. |
|---|---|
| | **PCT/CN2022/121333** |

### A. CLASSIFICATION OF SUBJECT MATTER

H04L 1/00(2006.01)i

According to International Patent Classification (IPC) or to both national classification and IPC

### B. FIELDS SEARCHED

Minimum documentation searched (classification system followed by classification symbols)

H04L

Documentation searched other than minimum documentation to the extent that such documents are included in the fields searched

Electronic data base consulted during the international search (name of data base and, where practicable, search terms used)

CNABS; CNTXT; CNKI; VEN; USTXT; WOTXT; EPTXT; 3GPP: 窄, 检测, 偏移, 控制资源集, 控制信道单元, 带宽, 监测, redcap, MTC, narrow, reduced, monitor, offset, CORESET, type0, PDCCH, SIB1, REG, CCE

### C. DOCUMENTS CONSIDERED TO BE RELEVANT

| Category* | Citation of document, with indication, where appropriate, of the relevant passages | Relevant to claim No. |
|---|---|---|
| PX | WO 2021212300 A1 (QUALCOMM INC. et al.) 28 October 2021 (2021-10-28) description, paragraphs [0042]-[0186], and figures 1-13 | 1-39 |
| X | CN 110505642 A (SPREADTRUM COMMUNICATIONS SHANGHAI INC.) 26 November 2019 (2019-11-26) description, paragraphs [0003]-[0004] and [0053]-[0141] | 1-39 |
| X | CN 110475361 A (SPREADTRUM COMMUNICATIONS SHANGHAI INC.) 19 November 2019 (2019-11-19) description, paragraphs [0054]-[0135] | 1-39 |
| A | WO 2020258216 A1 (QUALCOMM INC. et al.) 30 December 2020 (2020-12-30) entire document | 1-39 |

☐ Further documents are listed in the continuation of Box C.    ☑ See patent family annex.

| * | Special categories of cited documents: |
|---|---|
| "A" | document defining the general state of the art which is not considered to be of particular relevance |
| "E" | earlier application or patent but published on or after the international filing date |
| "L" | document which may throw doubts on priority claim(s) or which is cited to establish the publication date of another citation or other special reason (as specified) |
| "O" | document referring to an oral disclosure, use, exhibition or other means |
| "P" | document published prior to the international filing date but later than the priority date claimed |

| "T" | later document published after the international filing date or priority date and not in conflict with the application but cited to understand the principle or theory underlying the invention |
|---|---|
| "X" | document of particular relevance; the claimed invention cannot be considered novel or cannot be considered to involve an inventive step when the document is taken alone |
| "Y" | document of particular relevance; the claimed invention cannot be considered to involve an inventive step when the document is combined with one or more other such documents, such combination being obvious to a person skilled in the art |
| "&" | document member of the same patent family |

| Date of the actual completion of the international search | Date of mailing of the international search report |
|---|---|
| **13 November 2022** | **29 November 2022** |

| Name and mailing address of the ISA/CN | Authorized officer |
|---|---|
| **China National Intellectual Property Administration (ISA/ CN)** **No. 6, Xitucheng Road, Jimenqiao, Haidian District, Beijing 100088, China** | |
| Facsimile No. **(86-10)62019451** | Telephone No. |

Form PCT/ISA/210 (second sheet) (January 2015)

**INTERNATIONAL SEARCH REPORT**
**Information on patent family members**

International application No.

**PCT/CN2022/121333**

| Patent document cited in search report | | | Publication date (day/month/year) | Patent family member(s) | | | Publication date (day/month/year) |
|---|---|---|---|---|---|---|---|
| WO | 2021212300 | A1 | 28 October 2021 | None | | | |
| CN | 110505642 | A | 26 November 2019 | US | 2022321311 | A1 | 06 October 2022 |
| | | | | WO | 2021031895 | A1 | 25 February 2021 |
| | | | | EP | 4017070 | A1 | 22 June 2022 |
| | | | | CN | 110505642 | B | 11 February 2022 |
| | | | | IN | 202217014071 | A | 01 July 2022 |
| CN | 110475361 | A | 19 November 2019 | EP | 4017178 | A1 | 22 June 2022 |
| | | | | JP | 2022544694 | A | 20 October 2022 |
| | | | | KR | 20220051205 | A | 26 April 2022 |
| | | | | US | 2022330242 | A1 | 13 October 2022 |
| | | | | WO | 2021031897 | A1 | 25 February 2021 |
| | | | | CN | 110475361 | B | 10 June 2022 |
| | | | | IN | 202217014247 | A | 01 July 2022 |
| WO | 2020258216 | A1 | 30 December 2020 | US | 2022304014 | A1 | 22 September 2022 |
| | | | | EP | 3991337 | A1 | 04 May 2022 |
| | | | | CN | 113994618 | A | 28 January 2022 |
| | | | | IN | 202127055804 | A | 05 August 2022 |

Form PCT/ISA/210 (patent family annex) (January 2015)

**REFERENCES CITED IN THE DESCRIPTION**

**Patent documents cited in the description**

- CN 202111151018